(19) Europäisches Patentamt
European Patent Office
Office européen des brevets

(11) Publication number: **0 276 801 A2**

(12) **EUROPEAN PATENT APPLICATION**

(21) Application number: **88101045.8**

(51) Int. Cl.⁴: **C08F 12/00**

(22) Date of filing: **26.01.88**

(30) Priority: **28.01.87 JP 17973/87**

(43) Date of publication of application: **03.08.88 Bulletin 88/31**

(84) Designated Contracting States: **BE CH DE FR GB IT LI NL SE**

(71) Applicant: **IDEMITSU KOSAN COMPANY LIMITED**
**No. 1-1, 3-chome, Marunouchi Chiyoda-ku**
**Tokyo(JP)**

(72) Inventor: **Funaki, Keisuke**
**Idemitsu Kosan Company Limited 1280 Kamiizumi**
**Sodegaura-machi Kimitsu-gun**
**Chiba-ken(JP)**
Inventor: **Kuramoto, Masahiko**
**Idemitsu Kosan Company Limited 1280 Kamiizumi**
**Sodegaura-machi Kimitsu-gun**
**Chiba-ken(JP)**
Inventor: **Ishihara, Nobuhide**
**Idemitsu Kosan Company Limited 1280 Kamiizumi**
**Sodegaura-machi Kimitsu-gun**
**Chiba-ken(JP)**

(74) Representative: **Türk, Gille, Hrabal**
**Bruckner Strasse 20**
**D-4000 Düsseldorf 13(DE)**

(54) **Styrene copolymers and process for producing said copolymers.**

(57) Novel styrene copolymers having a stereostructure that the stereoregularity is mainly syndiotactic, which comprises at least one structural unit (I) represented by the general formula (A) and a structural unit (II) represented by the general formula (B), and has a degree of polymerization of at least 5, and a process for efficiently producing said novel styrene copolymers.

General Formula (A):

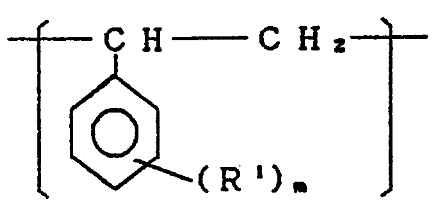

EP 0 276 801 A2

General Formula (B):

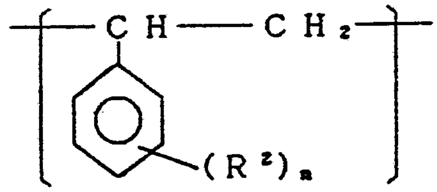

(wherein all the symbols are as defined in the appended claims). These styrene copolymers are much superior to conventional attactic polystyrenes and other polymers, and further are excellent in chemical resistance.

FIG. 1 (a1)

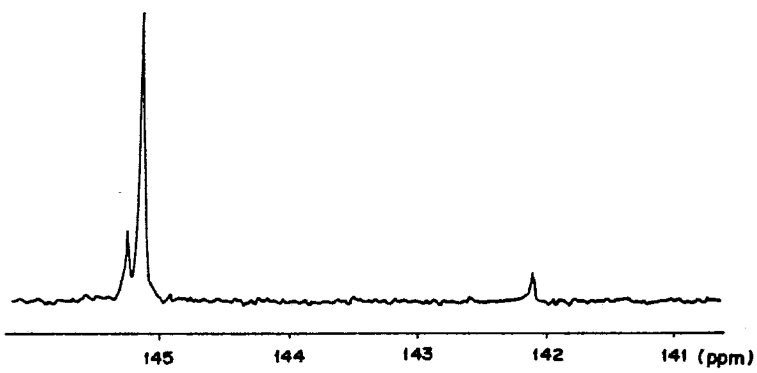

# STYRENE COPOLYMERS AND PROCESS FOR PRODUCING SAID COPOLYMERS

## BACKGROUND OF THE INVENTION

### I. Field of the Invention

The present invention relates to styrene copolymers having a new stereostructure and a process for producing said copolymers. More particularly, it is concerned with styrene copolymers in which the stereoregularity of side chains to the polymer main chain is mainly syndiotactic, and a process for efficiently producing said copolymers.

### 2. Description of the Related Art

In general, as styrene copolymers, atactic styrene copolymers which are produced by radical polymerization and isotactic styrene copolymers which are produced using a Ziegler catalyst are known. As a styrene copolymers having a syndiotactic structure, only an alternating copolymer of styrene and methyl methacrylate is known.

However, styrene copolymers having a syndiotactic structure which are produced from two or more of styrene-based monomers have not been known.

## SUMMARY OF THE INVENTION

As a result of extensive investigations to produce styrene copolymers of high syndiotactic structure, particularly produced from two or more of styrene-based monomers, which have not been obtained, it has been found that the object is attained by polymerizing two or more of styrene-based monomers by the use of a catalyst comprising specified transition metal compounds and organometallic compounds.

The present invention relates to styrene copolymers which comprises at least one structural unit (I) represented by the general formula (A):

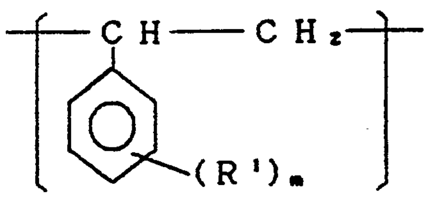

..... (A)

(wherein $R^1$ is a hydrogen atom, a halogen atom, or a carbon, oxygen, nitrogen, sulfur, phosphine or silicon-containing group, m is I, 2 or 3, and when m is 2 or 3, $R^1$s may be the same or different) and a structural unit (II) represented by the general formula (B):

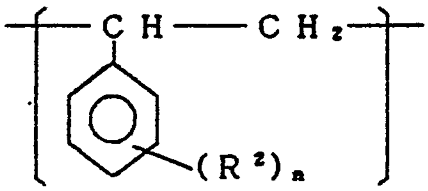

..... (B)

(wherein $R^2$ is a hydrogen atom, a halogen atom, or a carbon, oxygen, nitrogen, sulfur, phosphine or silicon-containing group, n is I, 2 or 3, and when n is 2 or 3, $R^2$s may be the same or different) (excluding the same as the structural unit (I));

has a degree of polymerization of at least 5; and

has a stereoregularity which is mainly syndiotactic.

The present invention further relates to a process for producing the above styrene copolymers which comprises copolymerizing at least one styrene-based monomer represented by the general formula (A'):

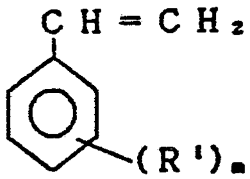

..... (A')

(wherein $R^1$ and m are the same as defined in the general formula (A)) and a styrene-based compound represented by the general formula (B'):

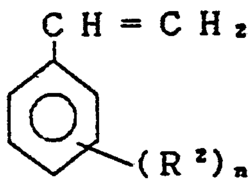

..... (B')

(wherein $R^2$ and n are the same as defined in the general formula (B)) (excluding the same as the styrene-based monomer or monomers of the general formula (A')) in the presence of a catalyst comprising (a) a titanium compound and (b) a contact product of an organoaluminum compound and a condensing agent.

## BRIEF DESCRIPTION OF THE DRAWINGS

Figs. l($a_1$), l($a_2$), 2, 3, 4($a_1$), 4($a_2$), 5($a_1$), 5($a_2$), 6, 7, 8, 9(a), l0, ll(a), l2(a), l3, l4(a), l5, l6, l7, l8, l9, 20 and 2l represent $^{13}$C-NMR spectra of the styrene copolymers obtained in the examples and comparative examples.

Figs. l(b), 4(b), 5(b), 9(b), ll(b), l2(b) and l4(b) represent the $^1$H-NMR spectra of the polymers or copolymers obtained in the examples and comparative examples.

## DESCRIPTION OF THE PREFERRED EMBODIMENT

The styrene copolymers of the present invention has the structural unit (I) (i.e., a repeating unit) represented by the general formula (A) and the structural unit (II) represented by the general formula (B).

In the general formulae (A) and (B), $R^1$ and $R^2$ are each a hydrogen atom, a halogen atom (e.g., chlorine, bromine and iodine), or a carbon, oxygen, nitrogen, sulfur, phosphine or silicon-containing group.

Representative examples of the carbon atom-containing group are an alkyl group having l to 20 carbon atoms (e.g., a methyl group, an ethyl group, an isopropyl group, and a tert-butyl group), and a halogen-substituted alkyl group having l to 20 carbon atoms (e.g., a chloromethyl group, a bromomethyl group and a chloroethyl group).

Representative examples of the carbon atom and oxygen atom-containing group are an alkoxy group having l to l0 carbon atoms (e.g., a methoxy group, an ethoxy group and an isopropoxy group) and a carboxyester group having l to l0 carbon atoms (e.g., a carboxymethylester group and a carboxyethylester group).

Representative examples of the carbon atom and silicon atom-containing group are an alkylsilyl group (e.g., a trimethylsilyl group) and the like.

Representative examples of the carbon atom and nitrogen atom-containing group are an alkylamino group having l to 20 carbon atoms (e.g., a dimethylamino group) and a cyano group.

Representative examples of the sulfur atom-containing group are a sulfonyl group, a sulfonic acid alkyl ester group, an alkylthio group and a mercapto group.

Representative examples of the phosphine atom-containing group are a phosphoric acid ester group, a phosphous acid ester group and an alkylphofinyl group.

m and n are each l, 2 or 3. When m is 2 or 3, m $R^1$s may be the same or different. Similarly, when n is

2 or 3, n $R^2$s may be the same or different.

Representative examples of the above structural units (I) and (II) are shown below.

Alkylstyrene units such as a styrene unit, a p-methylstyrene unit, a m-methylstyrene unit, an o-methylstyrene unit, a 2,4-dimethylstyrene unit, a 2,5-dimethylstyrene unit, a 3,4-dimethylstyrene unit, a 3,5-dimethylstyrene unit and a p-tert-butylstyrene unit; halogenated styrene units such as a p-chlorostyrene unit, a m-chlorostyrene unit, an o-chlorostyrene unit, a p-bromostyrene unit, a m-bromostyrene unit, an o-bromostyrene unit, a p-fluorostyrene unit, a m-fluorostyrene unit, an o-fluorostyrene unit and an o-metyl-p-fluorostyrene unit; halogen-substituted alkylstyrene units such as a p-chloromethylstyrene group, a m-chloromethylstyrene unit and an o-chloromethylstyrene unit; alkoxystyrene units such as a p-methoxystyrene unit, a m-methoxystyrene, an o-methoxystyrene unit, a p-ethoxystyrene unit, a m-ethoxystyrene unit and an o-ethoxystyrene unit; carboxyesterstyrene units such as a p-carboxymethylstyrene unit, a m-carboxymethylstyrene unit and an o-carboxymethylstyrene unit; alkyletherstyrene units such as a p-vinylbenzylpropyl ether unit; alkylsilylstyrene units such as a p-trimethylsilylstyrene unit; ethyl vinylbenzenesulfonate unit, and vinylstyrene units such as a vinylbenzyldimethoxy phosphide unit and a p-vinylstyrene unit.

Since the styrene copolymers of the present invention are of the copolymer type, the structural units (I) and (II) should be different from each other; the styrene copolymers of the present invention should be composed of one structural unit (I) and one or more structural units (II).

Since, as described above, the styrene copolymers of the present invention may contain two or more structural units which are different from each other, the styrene copolymers of the present invention includes, as well as two component copolymers, three component copolymers, four component copolymers and so forth.

The styrene copolymers of the present invention have a degree of polymerization of at least 5, and have a stereostructure in which the stereoregularity is mainly syndiotactic, i.e., a stereostructure that phenyl groups or substituted phenyl groups as side chains are located alternately at opposite positions relative to the main chain composed of carbon-carbon bonds. The tacticity is quantitatively determined by the nuclear magnetic resonance method (NMR method).

More specifically, the tacticity is determined by analyzing aromatic ring $C_1$ carbon signals and methinemethylene carbon signals as measured by $^{13}$C-NMR (NMR spectrum using carbon isotope), or proton signals as measured by $^1$H-NMR.

The tacticity as determined by the NMR method in the present invention is indicated in terms of proportions of structural units continuously connected to each other, i.e., diad in which two structural units are connected to each other, triad in which three structural units are connected to each other, and pentad in which five structural units are connected to each other. The styrene copolymers of the present invention having a stereostructure that the stereoregularity is mainly syndiotactic mean copolymers having such a syndiotactic structure that the proportion of the diad is at least 85%, or the proportion of the pentad is at least 50%. The degree of syndiotacticity is somewhat increased depending on the type of the group or groups in the above structural units (A) and (B) as compared with the conventional styrene copolymers and, therefore, styrene copolymers the degree of syndiotacticity of which is increased as compared with the conventional styrene copolymers are also included in the present invention even though the above specified values are not satisfied.

In the styrene copolymers of the present invention, the syndiotactic arrangement exists not only between the structural units (I) and (I), and between the structural units (II) and (II), but also between the structural units (I) and (II); that is, the styrene copolymers of the present invention are of the cosyndiotactic structure.

The styrene copolymers of the present invention may be block copolymers, random copolymers, alternating copolymers, etc., comprising the structural units (I) and (II).

The styrene copolymers of the present invention is not limited to the above specified styrene copolymers; that is, the styrene copolymers of the present invention includes, as well as the above specified styrene copolymers, mixtures of the above specified styrene copolymers and isotactic or atactic styrene copolymers and the above specified styrene copolymers with isotactic or attactic styrene copolymers incorporated therein, as long as the syndiotacticity is within the above specified range. Moreover, the styrene copolymers of the present invention may be mixtures of styrene copolymers having different molecular weights.

The degree of polymerization of the styrene copolymers of the present invention is at least 5 and preferably at least l0.

The styrene copolymers of the present invention can be produced by copolymerizing at least one styrene-based monomer represented by the general formula (A'):

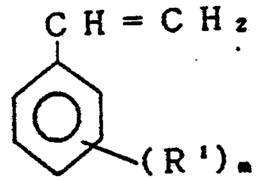

..... (A')

(wherein $R^1$ and m are the sane as defined above) and two or more styrene-based monomers represented by the general formula (B'):

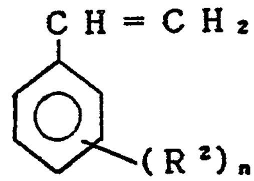

..... (B')

(wherein $R^2$ and n are the same as defined above) in the presence of a catalyst comprising (a) a titanium compound and (b) a contact product of an organoaluminum compound and a condensing agent.

As the titanium component (a), various titanium compounds can be used. Preferably the titanium component (a) is at least one titanium compound selected from titanium compounds and titanium chelate compounds represented by the general formula (C):

$TiR^3_aR^4_bR^5_cX^1_{4-(a+b+c)}$ ..... (C)

or the general formula (D):

$TiR^3_dR^4_eX^1_{3-(d+e)}$ ..... (D)

(wherein $R^3$, $R^4$ and $R^5$ are each a hydrogen atom, an alkyl group having l to 20 carbon atoms, an alkoxy group having l to 20 carbon atoms, an aryl group having 6 to 20 carbon atoms, an alkylaryl group having 6 to 20 carbon atoms, an arylalkyl group having 6 to 20 carbon atoms, an acyloxy group having l to 20 carbon atoms, a cyclopentadienyl group, a substituted cyclopentadienyl group or an indenyl group, $X^1$ is a halogen atom, a, b and c are each an integer of 0 to 4, and d and e are each an integer of 0 to 3).

Representative examples of the alkyl group having l to 20 as represented by $R^3$, $R^4$ or $R^5$ are a methyl group, an ethyl group, a propyl group, a butyl group, an amyl group, an isoamyl group, an isobutyl group, an octyl group and a 2-ethylhexyl group.

Representative examples of the alkoxy group having l to 20 carbon atoms are a methoxy group, an ethoxy group, a propoxy group, a butoxy group, an amyloxy group, a hexyloxy group and a 2-ethylhexyloxy group.

Representative examples of the aryl, alkylaryl or arylalkyl having 6 to 20 carbon atoms are a phenyl group, a tolyl group, a xylyl group and a benzyl group.

A representative example of the acyloxy group having l to 20 carbon atoms is a heptadecylcarbonyloxy group.

Representative examples of the substituted cyclopentadienyl group are a methylcyclopentadienyl group, a l,2-dimethylcyclopentadienyl group and a pentamethylcyclopentadienyl group.

In the general formulae (C) and (D), $R^3$, $R^4$ and $R^5$ may be the same or different.

$X^1$ is a halogen atom, i.e., chlorine, bromine, iodine or fluorine.

a, b and c are each an integer of 0 to 4.

d and e are each an integer of 0 to 3.

Representative examples of the tetravalent titanium compounds and titanium chelate compounds represented by the general formula (C) are methyltitanium trichloride, titanium tetramethoxide, titanium tetraethoxide, titanium monoisopropoxy trichloride, titanium diisopropoxy dichloride, titanium triisopropoxy monochloride, tetra(2-ethylhexyloxy)titanium, cyclopentadienyltitanium trichloride, biscyclopentadienyltitanium dichloride, titanium tetrachloride, titanium tetrabromide, bis(2,4-pentanedionate)titanium oxide, bis-(2;4-pentanedionate)titanium dichloride, and bis(2,4-pentanedionate) titanium dibutoxide.

In addition, as the titanium component (a), condensed titanium compounds represented by the general formula (E):

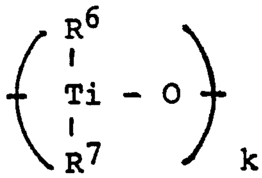

..... (E)

(wherein $R^6$ and $R^7$ are each a halogen atom, an alkoxy group having l to 20 carbon atoms, or an acyloxy group, and k is a number of 2 to 20) can be used.

The above titanium compounds can be used in a state that they are adsorbed or deposited on a carrier such as magnesium compounds, silica and alumina, or in the form of complexes with esters or ethers, for example.

Representative examples of the trivalent titanium compounds represented by the above general formula (D) as the titanium component (a) are titanium trihalide such as titanium trichloride and cyclopentadienyltitanium compounds such as cyclopentadienyltitanium dichloride. In addition, compounds resulting from reduction of tetravalent titanium compounds can be used. These trivalent titanium compounds may be used in the form of complexes with esters or ethers, for example.

The component (b) to be used in combination with the above titanium component (a) is prepared by contacting an organoaluminum compound and a condensing agent.

As the organoaluminum compound to be used in the component (b), organoaluminum compounds (trialkylaluminum) represented by the general formula (F):

$AlR^8_3$ ..... (F)

(wherein $R^8$ is an alkyl group having l to 8 carbon atoms) are usually used. Representative examples of the organoaluminum compound of the general formula (F) are trimethylaluminum, triethylaluminum and triisobutylaluminum. Of these compounds, trimethylaluminum is most preferred.

A typical example of the condensing agent to be condensed with the above organoaluminum compound is water. In addition, any compounds can be used as long as they undergo a condensation reaction with alkylaluminum compounds.

An example of the reaction product between an alkylaluminum compound, which is a typical example of the organoaluminum compound component, and water is alkylaluminoxane represented by the following general formula (G):

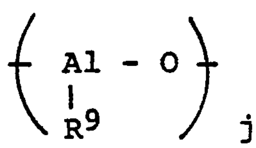

..... (G)

(wherein $R^9$ is an alkyl group having l to 8 carbon atoms, and j is a number of 2 to 50).

The reaction between the organoaluminum compound and water is not critical and can be carried out by known techniques. For example, (l) a method in which the organoaluminum compound is dissolved in an organic solvent and then is brought into contact with water; (2) a method in which the organoaluminum compound is added at the time of polymerization and then water is added; and (3) a method in which water of crystallization contained in, e.g., metal salts, or water adsorbed on organic or inorganic substances is reacted with the organoaluminum compound can be employed.

In the catalyst for use in the process of the present invention, of course, the component (b) can be used alone. In addition, the component (b) can be used in admixture with the organoaluminum compound represented by the general formula (F) or other organometallic compounds, or can be used in the form that it is adsorbed or deposited on inorganic substances and so forth.

The catalyst for use in the process of the present invention contains the above components (a) and (b) as main components. In addition to the components (a) and (b), if desired, other catalyst components can be added.

The ratio of the component (a) to the component (b) in the catalyst of the present invention varies with the type of each component, the type of the styrene starting material, and other conditions, and thus cannot be determined unconditionally. Usually, however, the molar ratio of aluminum in the component (b) to

titanium in the component (a), i.e., aluminum/titanium, is preferably 1:1 to $1 \times 10^6$:1 and more preferably 10:1 to $1 \times 10^4$:1.

In accordance with the process of the present invention, at least one styrene-based monomer represented by the general formula (A') and at least one styrene-based monomer represented by the general formula (B') are copolymerized. The styrene-based monomer represented by the general formula (A') forms the structural unit (I) of the general formula (A), and the styrene-based monomer represented by the general formula (B'), the structural unit (II) of the general formula (B) in course of the copolymerization reaction. Thus, as representative examples of the styrene-based monomers represented by the general formulae (A') and (B'), compounds corresponding to the representative examples of the structural units (I) and (II) can be listed.

In accordance with the process of the present invention, two or more styrene-based monomers as described above are copolymerized in the presence of a catalyst containing the above components (a) and (b). This polymerization may be bulk polymerization or solution polymerization. In the solution polymerization, as the solvent, aliphatic hydrocarbons such as pentane, hexane and heptane, alicyclic hydrocarbons such as cyclohexane, aromatic hydrocarbons such as benzene, toluene and xylene, and so on can be used. The polymerization temperature is not critical; it is usually 0 to 90°C and preferably 20 to 70°C.

In order to control the molecular weight of the styrene copolymer to be formed, it is effective to perform the copolymerization reaction in the presence of hydrogen. In this case, the partial pressure of hydrogen is appropriately chosen within the range of 0.01 to 50 kg/cm$^2$.

The present invention is described in greater detail with reference to the following examples although it is not intended to be limited thereto.

## EXAMPLE 1

(1) Preparation of Organoaluminum Compound Component (b)

47.4 ml (0.492 mol) of trimethylaluminum and 35.5 g (0.142 mol) of copper sulfate pentahydrate were reacted at 20°C for 24 hours in 200 ml of a toluene solvent, and then solids were removed to obtain a toluene solution containing 12.4 g of methylaluminoxane as the organoaluminum compound component (b). The molecular weight of the methylaluminoxane as determined by the benzene cryoscopic method was 721.

(2) Production of Styrene/p-Methylstyrene Copolymer

60 ml of toluene and 5 mmol (as aluminum atom) of the methylaluminoxane obtained in (1) above were placed in a 500-milliliter glass vessel equipped with a stirrer, and then 0.05 mmol of tetraethoxytitanium was added thereto. The resulting solution was heated. At 50°C, a mixture of 475 mmol of styrene and 25 mmol of p-methylstyrene was added, and then polymerization was performed for 2 hours. At the end of the time, methanol was injected to stop the reaction. Then a mixture of hydrochloric acid and methanol was added to decompose the catalyst component. The yield of the styrene copolymer thus obtained was 8.2 g.

The styrene copolymer was introduced in a Soxhlet extractor and extracted with methyl ethyl ketone for 4 hours. The insoluble content was 99 wt%. For this methyl ethyl ketone-insoluble styrene copolymer, the p-methylstyrene content was 7 mol%, the weight average molecular weight was 360,000, the number average molecular weight was 200,000, and the melting point was 246°C.

Aromatic ring $C_1$ carbon signals of the $^{13}$C-NMR spectrum (a nuclear magnetic resonance spectrum using carbon isotope) of the above methyl ethyl ketone-insoluble styrene copolymer are shown in Fig. 1 ($a_1$); methine•methylene carbon signals of the $^{13}$C-NMR spectrum, in Fig. 1 ($a_2$); and the $^1$H-NMR spectrum (a proton nuclear magnetic resonance spectrum), in Fig. 1 (b).

COMPARATIVE EXAMPLE I

A monomer mixture of styrene and p-methylstyrene (95:5 by mol) was polymerized at 60°C using an organic peroxide to obtain an atactic styrene copolymer. This styrene copolymer was wholly soluble in methyl ethyl ketone, contained 6 mol% of p-methylstyrene, and had no melting point and had a glass transition temperature of 83°C.

Aromatic ring $C_1$ carbon signals of the $^{13}C$-NMR spectrum of the above styrene copolymer are shown in Fig. 2.

COMPARATIVE EXAMPLE 2

In the presence of a catalyst consisting of 2.5 mmol of a titanium catalyst component which had been prepared by reacting 10.0 g of magnesium ethoxide and 50 ml of titanium tetrachloride, 12.5 mmol of triethylaluminum and 12.5 mmol of diethylaluminum chloride, 190 mmol of styrene and 10 mmol of p-methylstyrene were polymerized 50°C for 2 hours in a heptane solvent to obtain 3.19 g of a copolymer. This copolymer was extracted with methyl ethyl ketone in the same manner as in Example I (2) to obtain an isotactic styrene copolymer which was insoluble in methyl ethyl ketone. This copolymer contained 7 mol% of p-methylstyrene and had a melting point of 217°C.

Aromatic ring $C_1$ carbon signals of the $^{13}C$-NMR spectrum of the above copolymer are shown in Fig. 3.

As described in Japanese Patent Application Laid-open No. 104818/1987, the melting points of syndiotactic polystyrene and syndiotactic poly(p-methylstyrene) are 260-270°C and 173°C, respectively.

Aromatic $C_1$ carbon signals of the $^{13}C$-NMR spectra of the syndiotactic polystyrene and the syndiotactic poly(p-methylstyrene) are shown in Fig. 4($a_1$) and 4($a_2$), respectively; methine•methylene carbon signals of the $^{13}C$-NMR spectra of the syndiotactic polystyrene and the syndiotactic poly(p-methylstyrene) are shown in Fig. 5($a_1$) and Fig. 5($a_2$), respectively; and $^1H$-NMR spectra of the syndiotactic polystyrene and the syndiotactic poly(p-methylstyrene) are shown in Fig. 4(b) and Fig. 5(b), respectively.

Based on the analytical results of the above copolymer, the analytical results of the atactic styrene copolymer obtained in Comparative Example I and of the isotactic styrene copolymer obtained in Comparative Example 2, and further by comparing with the syndiotactic polystyrene and syndiotactic poly-(p-methylstyrene) as described in Japanese Patent Application Laid-open No. 104818/1987, it was confirmed that the styrene copolymer obtained in Example I had a co-syndiotactic structure.

(I) $^{13}C$-NMR Analysis

(i) Aromatic Ring $C_1$ Carbon Signals

It is well known that the splitting of aromatic ring $C_1$ carbon signals is ascribable to a polymer microstructure. The found values of the styrene copolymer obtained in Example I, the atactic styrene copolymer obtained in Comparative Example I and the isotactic styrene copolymer obtained in Comparative Example 2, and the values of the syndiotactic polystyrene and syndiotactic poly(p-methylstyrene) as described in Japanese Patent Application Laid-open No. 104818/1987 are summarized in Table I.

The $C_1$ carbon signals of the styrene polymer in the styrene copolymer obtained in Example I were at 145.11 ppm and 145.22 ppm. The signal at 145.11 ppm indicates the syndiotactic chain of styrene pendant. On the other hand, the signal at 145.22 ppm was not found in the copolymers of Comparative Examples I and 2; it is a signal ascribable to the co-syndiotactic structure. The $C_1$ carbon signal of p-methylstyrene of the styrene copolymer obtained in Example I was at 142.9 ppm. Since this signal appeared at a high magnetic field as compared with those of the copolymer of Comparative Example 2 and of syndiotactic poly(p-methylstyrene), it was confirmed that the styrene copolymer had a co-syndiotactic structure.

(ii) Methine•Methylene Carbon Signals

It is known that the methine•methylene carbon signal corresponds to the microstructure of a polymer. The methylene signal of the styrene copolymer obtained in Example I, the methine signal of the styrene portion, and the methine signal of the p-methylstyrene portion were at 44.69 ppm, 41.08 ppm and 40.65 ppm, respectively. As can be seen by comparison of syndiotactic polystyrene with syndiotactic poly(p-methylstyrene), it was confirmed that the styrene copolymer obtained in Example I had a syndiotactic structure.

(2) $^1$H-NMR Analysis

In the styrene copolymer obtained in Example I, the syndiotactic polystyrene and the syndiotactic poly-(p-styrene), only one signal was detected for each of methine and methylene proton in the polymer chain. Thus it was confirmed that 100% of the styrene copolymer was of the syndiotactic structure.

(3) Melting Point

The melting point of the styrene copolymer obtained in Example I was 246°C, which was intermediate between the melting point (260-270°C) of the syndiotactic polystyrene and the melting point (173°C) of the syndiotactic poly(p-methylstyrene), and which was higher than the melting point (217°C) of an equimolar amount of p-methylstyrene-containing isotactic polystyrene copolymer as obtained in Comparative Example 2. Thus it was confirmed that the styrene copolymer was a co-syndiotactic styrene copolymer.

(4) Monomer Reactivity Ratio

It is known that monomer reactivity ratios, $r_1$ and $r_2$, are important indexes indicating a monomer chain distribution in the copolymer chain (see Copolymerization I, Reaction Analysis, pp. 6-8, edited by Kobunshi Gakkai, Tokyo, Japan). Polymerization was performed several times in the same manner as in Example I except that the ratio of charged monomers was changed and the degree of polymerization was controlled at a low level (not more than 5%). On basis of the compositions of the copolymers obtained, the monomer reactivity ratio was determined by the curve fitting method. It was found that $r_1$ (styrene) = 0.420, $r_2$ (p-methylstyrene) = 1.568, and the product of $r_1$ and $r_2$, i.e., $r_1 \bullet r_2$, was 0.659. These values showed that the styrene copolymer obtained in Example I was a random copolymer, and further supported the results of the $^{13}$C-NMR spectrum.

Summarizing the results of (I), (2), (3) and (4) above, it was confirmed that the styrene copolymer obtained in Example I had a substantially co-syndiotactic stereostructure.

Table 1

| Run No. | p-Methylstyrene Content (mol%) | Aromatic Ring $C_1$ Carbon Signals ($^{13}C$-NMR) | |
|---|---|---|---|
| | | Styrene $C_1$ (ppm) | p-Methylstyrene $C_1$ (ppm) |
| Example 1 | 7 | 145.11<br>145.22 | 142.09 |
| Comparative Example 1 | 6 | 145.1-146.1 | - |
| Comparative Example 2 | 7 | 146.26<br>146.37 | 143.15 |
| Syndiotactic Polystyrene | 0 | 145.11 | - |
| Syndiotactic Poly(p-methyl-styrene) | 100 | - | 142.40 |

EXAMPLE 2

A styrene copolymer was produced in the same manner as in Example I (2) except that a mixture of 250 mmol of styrene and 250 mmol of p-methylstyrene was used as the monomer feed. The styrene copolymer thus obtained was extracted with methyl ethyl ketone.

The properties of the styrene copolymer are shown in Table 2, and aromatic ring $C_1$ carbon signals of the $^{13}C$-NMR spectrum of the styrene copolymer are shown in Fig. 6.

EXAMPLE 3

A styrene copolymer was produced in the same manner as in Example I (2) except that a mixture of 50 mmol of styrene and 450 mmol of p-methylstyrene was used as the monomer feed. The styrene copolymer thus obtained was extracted with methyl ethyl ketone.

The properties of the styrene copolymer are shown in Table 2, and aromatic ring $C_1$ carbon signals of the $^{13}C$-NMR spectrum of the styrene copolymer are shown in Fig. 7.

EXAMPLE 4

A styrene copolymer was produced in the same manner as in Example I (2) except that a catalyst consisting of 0.02 mmol of cyclopentadienyltitanium trichloride and l0 mmol (as aluminum atom) of methylaluminoxane was used as the catalyst and a mixture of 450 mmol of styrene and 50 mmol of p-methylstyrene was used as the monomer feed. The styrene copolymer thus obtained was extracted with methyl ethyl ketone.

The properties of the styrene copolymer are shown in Table 2, and aromatic ring $C_1$ carbon signals of the $^{13}C$-NMR spectrum of the styrene copolymer are shown in Fig. 8

EXAMPLE 5

A styrene copolymer was produced in the same manner as in Example I (2) except that a mixture of 475 mmol of styrene and 25 mmol of p-tert-butylstyrene was used as the monomer feed. The styrene copolymer was extracted with methyl ethyl ketone.

The properties of the styrene copolymer are shown in Table 2, and aromatic ring $C_1$ carbon signals and $C_4$ carbon signals of the $^{13}C$-NMR spectrum of the styrene copolymer are shown in Fig. 9(a), and the $^1H$-NMR spectrum is shown in Fig. 9(b).

EXAMPLE 6

A styrene copolymer was produced in the same manner as in Example I (2) except that a catalyst consisting of 0.05 mmol of tetraethoxytitanium and 40 mmol (as aluminum atom) of methylaluminoxane was used as the catalyst, a mixture of 250 mmol of styrene and 250 mmol of p-tert-butylstyrene was used as the monomer feed, and polymerization was performed for 4 hours. The styrene copolymer thus obtained was extracted with methyl ethyl ketone.

The properties of the styrene copolymer are shown in Table 2, and aromatic ring $C_1$ carbon signals and $C_4$ carbon signals of the $^{13}C$-NMR spectrum of the styrene copolymer are shown in Fig. I0.

For comparison, $C_1$ carbon signals and $C_4$ carbon signals of the syndiotactic poly(p-tert-butylstyrene) described in Japanese Patent Application Laid-open No. I04818/1987 are shown in Fig. II(a), and the $^1H$-NMR spectrum is shown in Fig. II(b).

EXAMPLE 7

A styrene copolymer was produced in the same manner as in Example I (2) except that a mixture of 450 mmol of styrene and 50 mmol of m-methylstyrene was used as the monomer feed. The styrene copolymer thus obtained was extracted with methyl ethyl ketone.

The properties of the styrene copolymer are shown in Table 2. Aromatic ring $C_1$ carbon signals of the $^{13}C$-NMR spectrum of the styrene copolymer are shown in Fig. I2(a), and the $^1H$-NMR spectrum is shown in Fig. I2(b).

EXAMPLE 8

A styrene copolymer was produced in the same manner as in Example 7 except that a mixture of I25 mmol of styrene and I25 mmol of m-methylstyrene was used as the monomer feed. The styrene copolymer thus obtained was extracted with methyl ethyl ketone.

The properties of the styrene copolymer are shown in Table 2, and aromatic ring $C_1$ carbon signals of the $^{13}$NMR spectrum of the styrene copolymer are shown in Fig. I3.

For comparison, $C_1$ carbon signals of the $^{13}C$-NMR spectrum of the syndiotactic poly(m-methylstyrene) described in Japanese Patent Application Laid-open No. I04818/1987 are shown in Fig. I4(a), and the $^1H$-NMR spectrum is shown in Fig. I4(b).

EXAMPLE 9

A styrene copolymer was produced in the same manner as in Example I (2) except that a catalyst consisting of 0.025 mmol of cyclopentadienyltitanium trichloride and 20 mmol (as aluminum atom) of methylaluminoxane was used as the catalyst and a mixture of I25 mmol of styrene and I25 mmol of p-fluorostyrene was used as the monomer feed. The styrene copolymer thus obtained was extracted with

methyl ethyl ketone.

The properties of the styrene copolymer are shown in Table 2, and aromatic ring $C_1$ carbon signals of the $^{13}$C-NMR spectrum of the styrene copolymer are shown in Fig. 15.

For comparison, $C_1$ carbon signals of the $^{13}$C-NMR spectrum of the syndiotactic poly(p-fluorostyrene) described in Japanese Patent Application Laid-open No. 104818/1987 are shown in Fig. 16.

## EXAMPLE 10

A styrene copolymer was produced in the same manner as in Example 1 (2) except that a catalyst consisting of 0.05 mmol of cyclopentadienyltitanium trichloride and 5 mmol (as aluminum atom) of methylaluminoxane was used as the catalyst and a mixture of 250 mmol of styrene and 167 mmol of p-chlorostyrene was used as the monomer feed. The styrene copolymer thus obtained was extracted with methyl ethyl ketone.

The properties of the styrene copolymer are shown in Table 2, and aromatic ring $C_1$ carbon signals of the $^{13}$C-NMR spectrum of the styrene copolymer are shown in Fig. 17.

## EXAMPLE 11

A styrene copolymer was produced in the same manner as in Example 1 (2) except that a catalyst consisting of 0.05 mmol of cyclopentadienyltitanium trichloride and 40 mmol (as aluminum atom) of methylaluminoxane was used as the catalyst, a mixture of 150 mmol of styrene and 350 mmol of p-chlorostyrene was used as the monomer feed, and polymerization was performed for 4 hours. The styrene copolymer thus obtained was extracted with methyl ethyl ketone.

The properties of the styrene copolymer were shown in Table 2, and aromatic ring $C_1$ carbon signals of the $^{13}$C-NMR spectrum of the styrene copolymer are shown in Fig. 18.

For comparison, $C_1$ carbon signals of the $^{13}$C-NMR spectrum of the syndiotactic poly(p-chlorostyrene) described in Japanese Patent Application Laid-open No. 104818/1987 are shown in Fig. 19.

## EXAMPLE 12

A styrene copolymer was produced in the same manner as in Example 9 except that a mixture of 125 mmol of styrene and 125 mmol of p-bromostyrene was used as the monomer feed. The styrene copolymer thus obtained was extracted with methyl ethyl ketone.

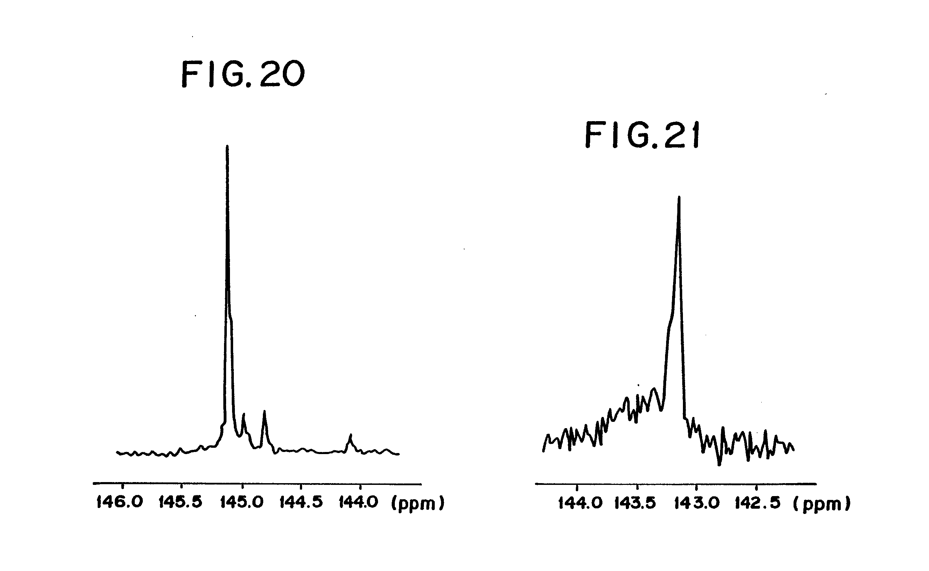

The properties of the styrene copolymer are shown in Table 2, and aromatic ring $C_1$ carbon signals of the $^{13}$C-NMR spectrum of the styrene copolymer are shown in Fig. 20.

For comparison, $C_1$ carbon signals of the $^{13}$C-NMR spectrum of the syndiotactic poly(p-bromostyrene) described in Japanese Patent Application Laid-open No. 104818/1987 are shown in Fig. 21.

Table 2

| Run No. | Catalyst | | Methyl-aluminoxane (mmol) | Polymerization Conditions | | Monomer | | |
|---|---|---|---|---|---|---|---|---|
| | Type | Amount (mmol) | | Time (min) | Temperature (°C) | Styrene (mmol) | Comonomer Type | Comonomer Amount (mmol) |
| Example 1 | $Ti(OEt)_4$ *1 | 0.05 | 5 | 120 | 50 | 475 | p-methylstyrene | 25 |
| " 2 | $Ti(OEt)_4$ *1 | 0.05 | 5 | 120 | 50 | 250 | p-methylstyrene | 250 |
| " 3 | $Ti(OEt)_4$ *1 | 0.05 | 5 | 120 | 50 | 50 | p-methylstyrene | 450 |
| " 4 | $CpTiCl_3$ *2 | 0.02 | 10 | 120 | 50 | 450 | p-methylstyrene | 50 |
| " 5 | $Ti(OEt)_4$ *1 | 0.05 | 5 | 120 | 50 | 475 | p-tert-butylstyrene | 25 |
| " 6 | $Ti(OEt)_4$ *1 | 0.05 | 40 | 240 | 50 | 250 | p-tert-butylstyrene | 250 |
| " 7 | $Ti(OEt)_4$ *1 | 0.05 | 5 | 240 | 50 | 450 | p-methylstyrene | 50 |
| " 8 | $Ti(OEt)_4$ *1 | 0.05 | 5 | 240 | 50 | 125 | m-methylstyrene | 125 |
| " 9 | $CpTiCl_3$ *2 | 0.025 | 20 | 120 | 50 | 125 | p-fluorostyrene | 125 |
| " 10 | $CpTiCl_3$ *2 | 0.05 | 5 | 120 | 50 | 250 | p-chlorostyrene | 167 |
| " 11 | $CpTiCl_3$ *2 | 0.05 | 40 | 240 | 50 | 150 | p-chlorostyrene | 350 |
| " 12 | $CpTiCl_3$ *2 | 0.025 | 20 | 120 | 50 | 125 | p-bromostyrene | 125 |

*1 Tetraethoxytitanium
*2 Cyclopentadienyltitanium trichloride
*3 Weight average molecular weight
*4 Number average molecular weight
*5 Glass transition point
*6 Melting point

Table 2 (Continued)

Properties of Styrene Copolymer

| Run No. | | Yield (g) | Extraction Residue (wt%) | Comonomer Content (mole%) | Molecular Weight | | Transition Temperature | |
|---|---|---|---|---|---|---|---|---|
| | | | | | Mw*3 | Mn*4 | Tg*5 (°C) | Tm*6 (°C) |
| Example | 1 | 8.2 | 99 | 7 | 360,000 | 200,000 | 100 | 246 |
| " | 2 | 11.1 | 57 | 63 | 230,000 | 99,000 | 104 | - |
| " | 3 | 3.0 | 20 | 80 | 260,000 | 77,000 | 109 | 172 |
| " | 4 | 17.8 | 77 | 14 | 79,000 | 45,000 | 98 | 198 |
| " | 5 | 7.3 | 77 | 7 | 390,000 | 210,000 | 103 | 215 |
| " | 6 | 39 | 35 | 53 | 93,000 | 37,000 | 124 | - |
| " | 7 | 1.7 | 84 | 21 | 390,000 | 38,000 | 91 | 232 |
| " | 8 | 1.1 | 71 | 63 | 320,000 | 120,000 | 80 | 185 |
| " | 9 | 12.3 | 69 | 6 | 49,000 | 19,000 | 97 | 253 |
| " | 10 | 8.7 | 82 | 5 | 65,000 | 41,000 | 97 | 240 |
| " | 11 | 21.2 | 31 | 26 | 35,000 | 11,000 | 92 | 185 |
| " | 12 | 4.9 | 64 | 7 | 58,000 | 38,000 | 99 | 228 |

*1 Tetraethoxytitanium
*2 Cyclopentadienyltitanium trichloride
*3 Weight average molecular weight
*4 Number average molecular weight
*5 Glass transition point
*6 Melting point

The styrene copolymers of the present invention are novel copolymers having a co-syndiotactic stereostructure that has not been obtained. Thus the styrene copolymers of the present invention are much superior in heat resistance to commonly used styrene polymers such as atactic polystyrene and other styrene copolymers, and further are excellent in chemical resistance. Accordingly the styrene copolymers of the present invention can be utilized as materials for production of articles satisfying the above requirements. Moreover, when a functional substituent is introduced in the side chain of benzene ring, the resulting styrene copolymers can be widely used as functional polymers.

## Claims

1. A styrene copolymer comprising at least one structural unit (I) represented by the general formula (A):

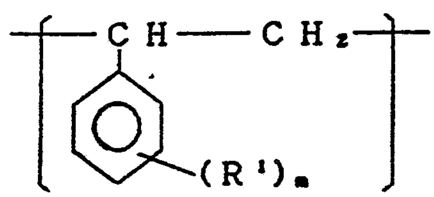

(wherein $R^1$ is a hydrogen atom, a halogen atom, or a carbon, oxygen, nitrogen, sulfur, phosphine or silicon atom-containing group, m is 1, 2 or 3, and when m is 2 or 3, $R^1$s may be the same or different) and a structural unit (II) represented by the general formula (B):

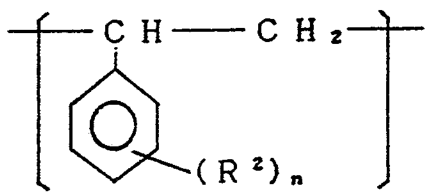

(wherein $R^2$ is a hydrogen atom, a halogen atom, or a carbon, oxygen, nitrogen, sulfur, phosphine or silicon atom-containing group, n is 1, 2 or 3, and when n is 2 or 3, $R^2$s may be the same or different) (provided that the structural unit (II) excludes the same as the structural unit (I)); having a degree of polymerization of at least 5; and having a stereostructure that the stereoregularity is mainly syndiotactic.

2. A process for producing a styrene copolymer comprising at least one structural unit (I) represented by the general formula (A):

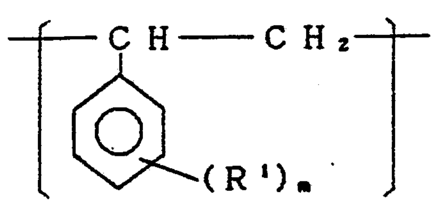

(wherein $R^1$ is a hydrogen atom, a halogen atom, or a carbon, oxygen, nitrogen, sulfur, phosphine or silicon atom-containing group, m is 1, 2 or 3, and when m is 2 or 3, $R^1$s may be the same or different) and a structural unit (II) represented by the general formula (B):

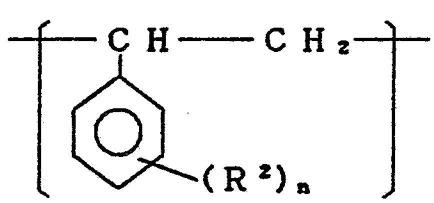

(wherein $R^2$ is a hydrogen atom, a halogen atom, or a carbon, oxygen, nitrogen, sulfur, phosphine or silicon atom-containing group, n is 1, 2 or 3, and when n is 2 or 3, $R^2$s may be the same or different) (provided that the structural unit (II) excludes the same as the structural unit (I)), having a degree of polymerization of at least 5, and having a stereostructure that the stereoregularity is mainly syndiotactic, which process comprises copolymerizing at least one styrene-based monomer represented by the general formula (A'):

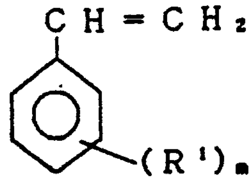

(wherein $R^1$ and m are the same as defined above) and a styrene-based monomer represented by the general formula (B'):

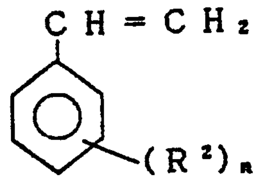

(wherein $R^2$ and n are the same as defined above) (provided that the styrene-based monomer of the general formula (B') excludes the same as that of the general formula (A')) in the presence of a catalyst comprising (a) a titanium compound and (b) a contact product of an organoaluminum compound and a condensing agent.

3. The process as claimed in Claim 2 wherein the titanium compound is at least one compound selected from titanium compounds and titanium chleate compounds represented by the general formula:

$TiR^3_aR^4_bR^5_cX^1_{4-(a+b+c)}$

or the general formula:

$TiR^3_dR^4_eX^1_{3-(d+e)}$

(wherein $R^3$, $R^4$ and $R^5$ are each a hydrogen atom, an alkyl group having l to 20 carbon atoms, an alkoxy group having l to 20 carbon atoms, an aryl group having 6 to 20 carbon atoms, an alkylaryl group, an arylalkyl group, an acyloxy group having l to 20 carbon atoms, a cyclopentadienyl group, a substituted cyclopentadienyl group or an indenyl group, $X^1$ is a halogen atom, a, b and c are each an integer of 0 to 4, and d and e are each an integer of 0 to 3).

4. The process as claimed in Claim 2 wherein the aluminum component is a product obtained by modifying trimethylaluminum with water.

FIG. 1 (a1)

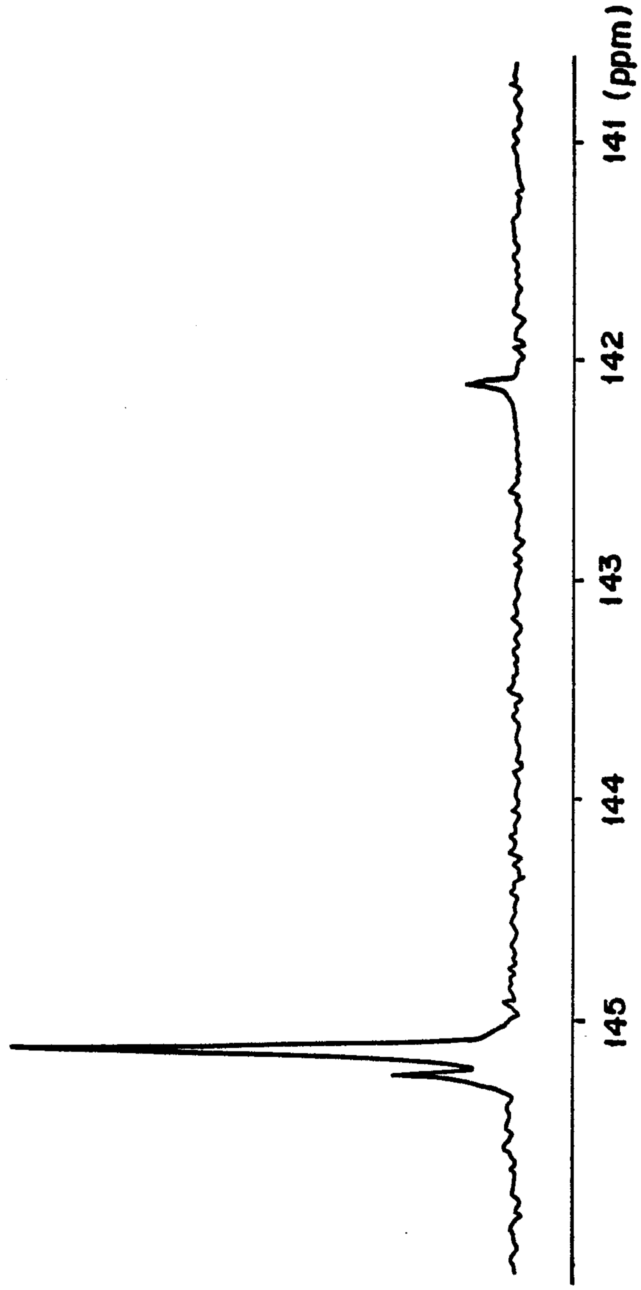

FIG. 1 (a2)

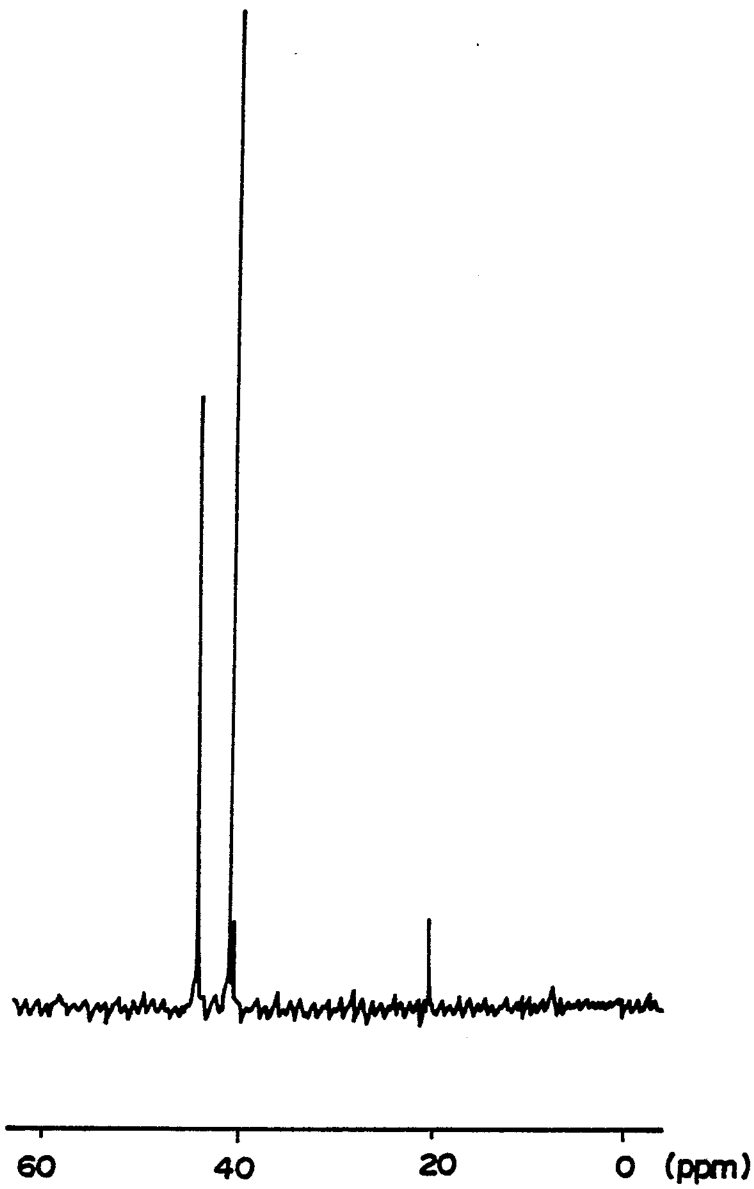

FIG. 1(b)

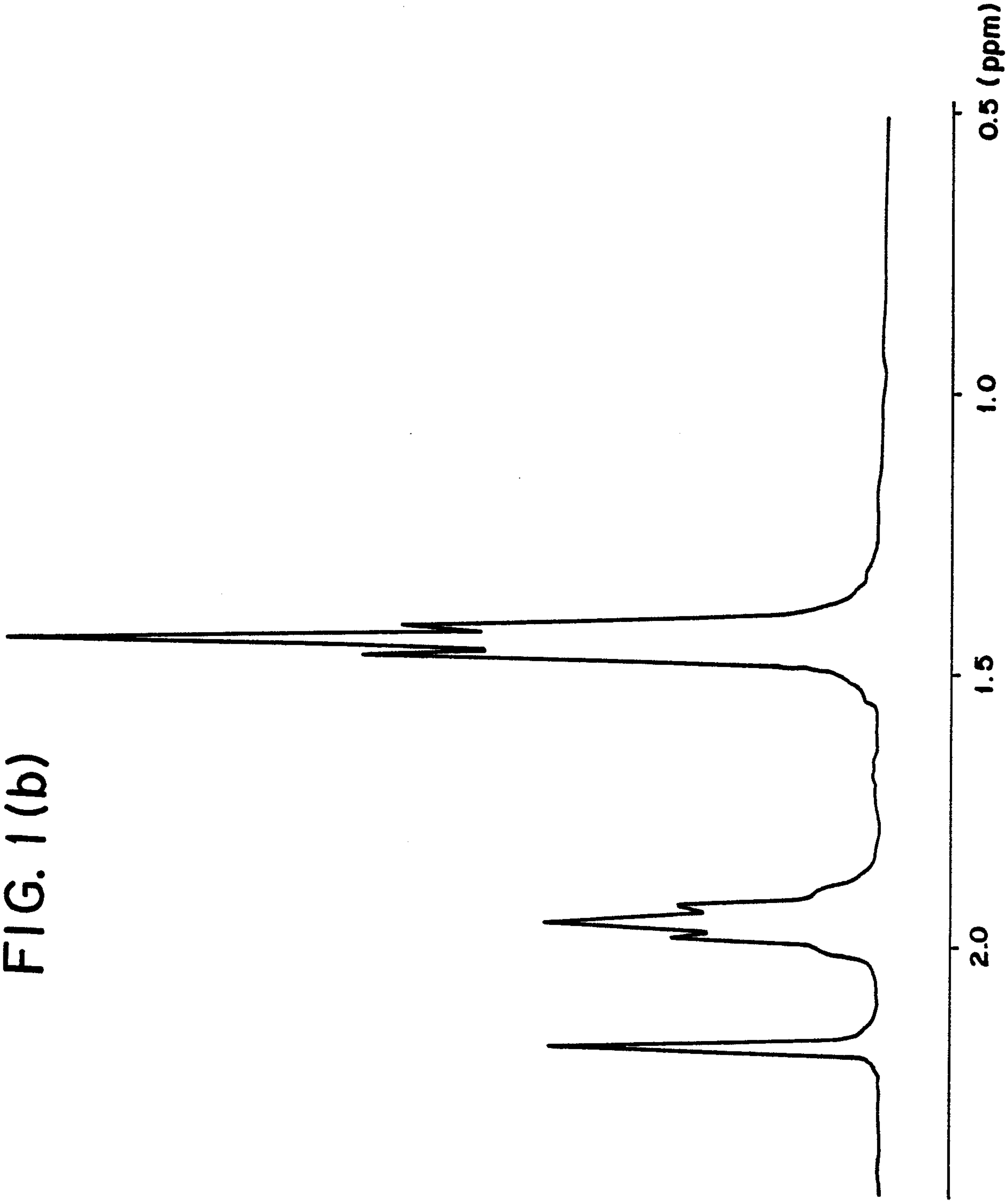

FIG. 2

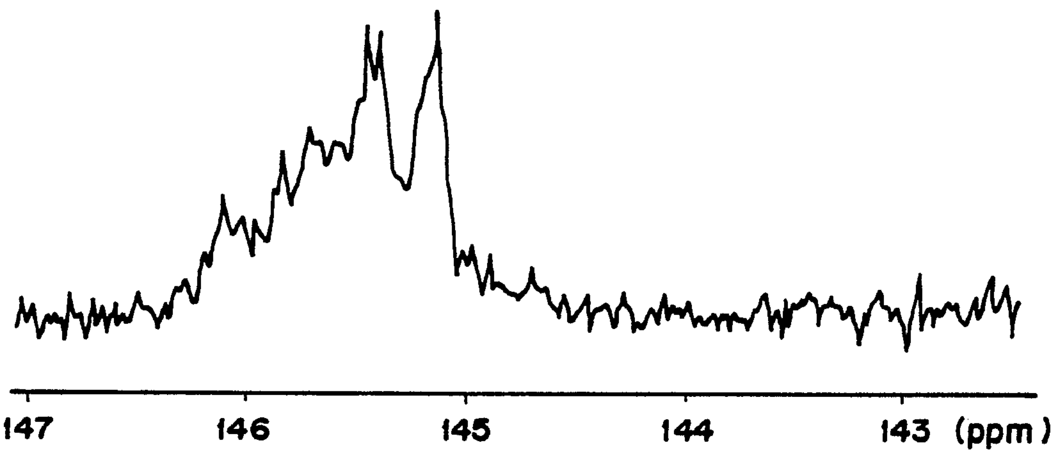


FIG. 3

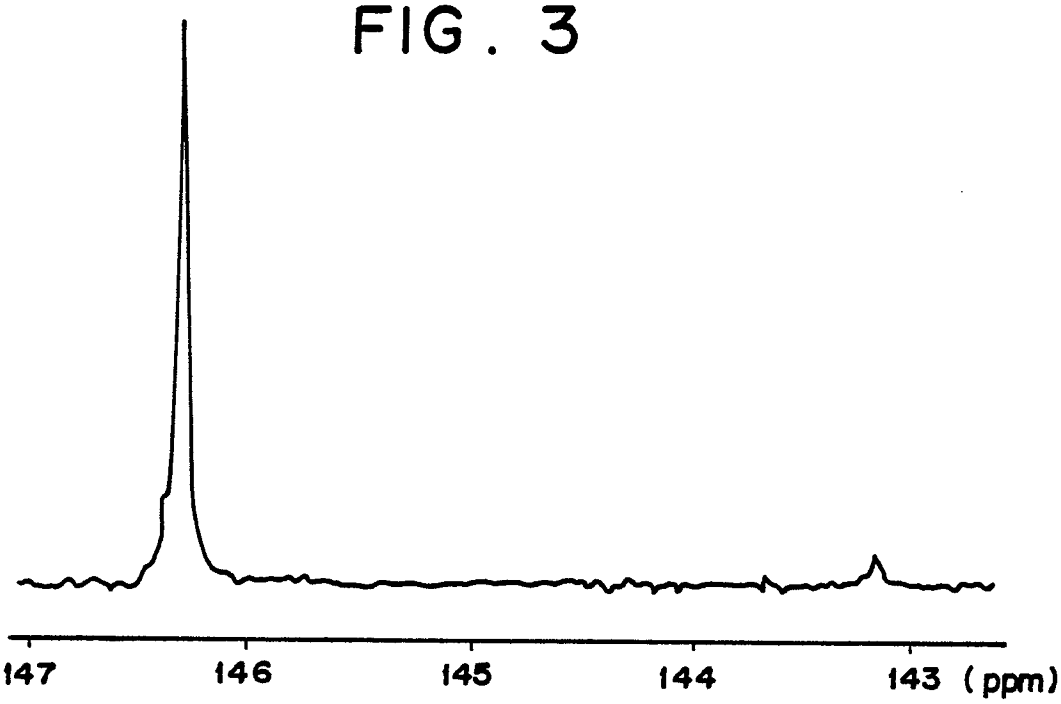

FIG.4(a2)

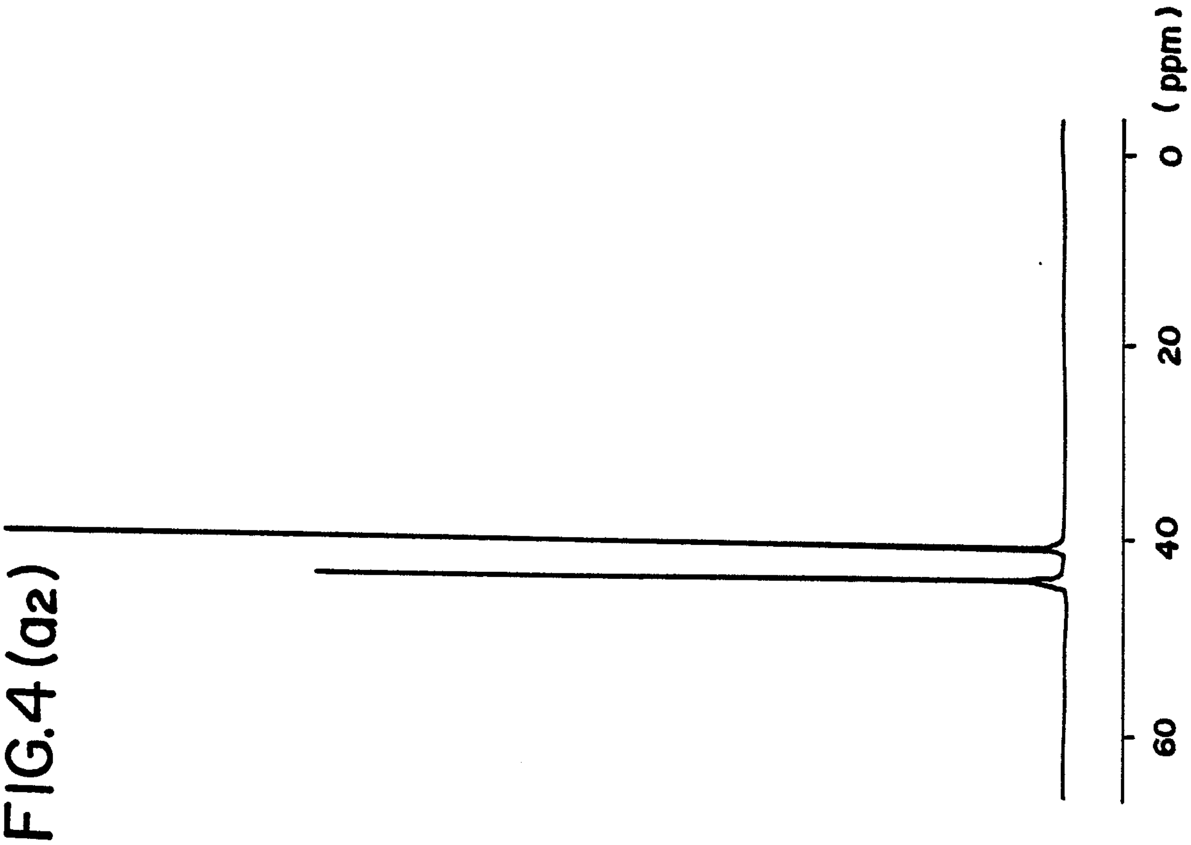


FIG.4(a1)

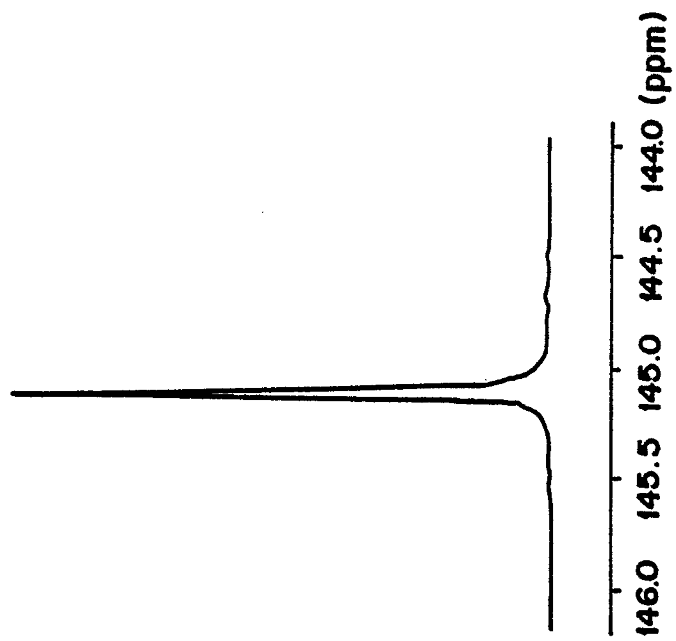

FIG. 4(b)

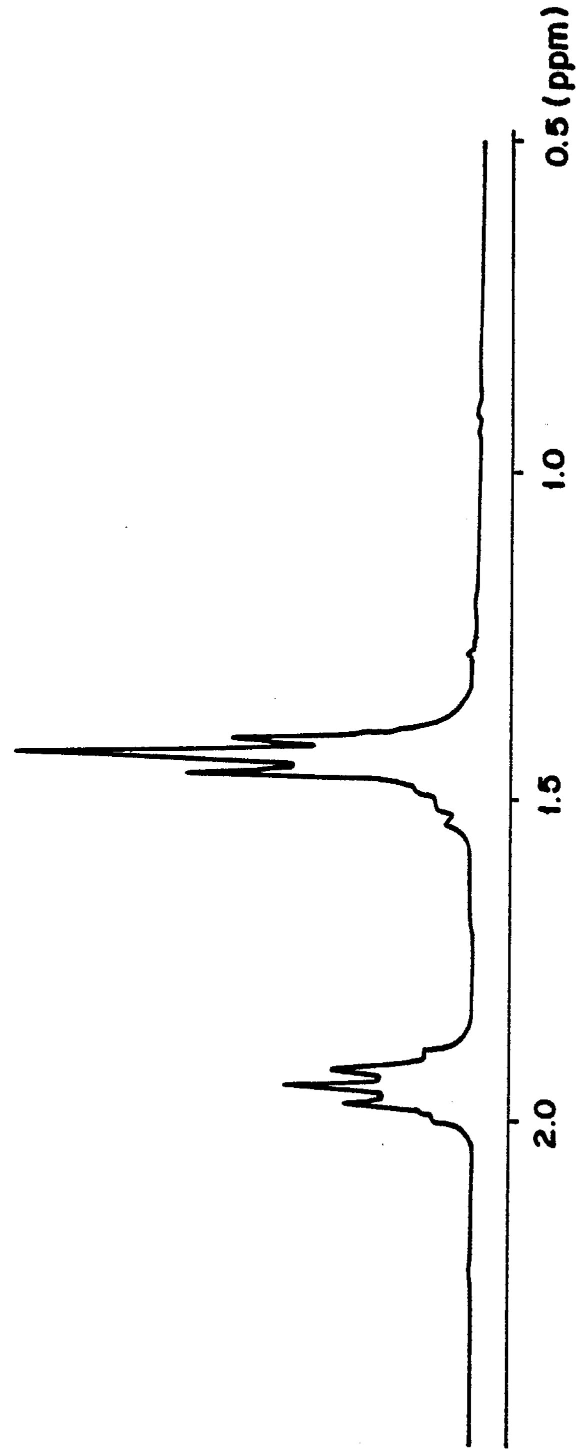

FIG. 5(a1)

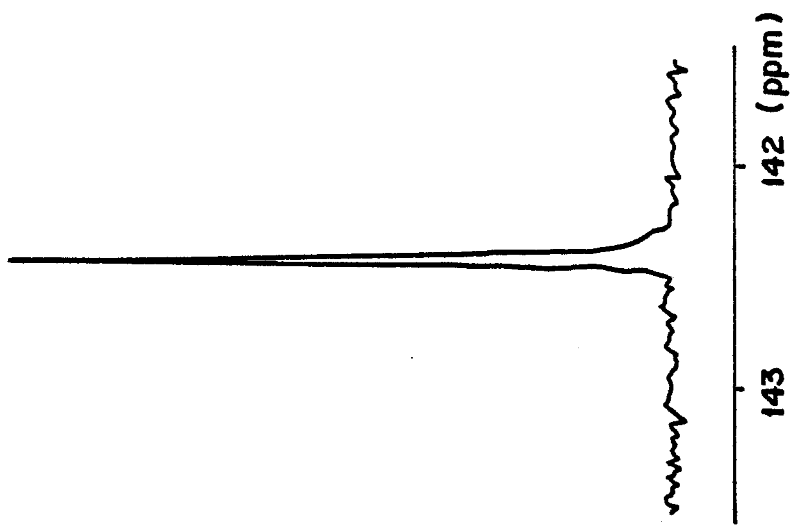


FIG. 5(a2)

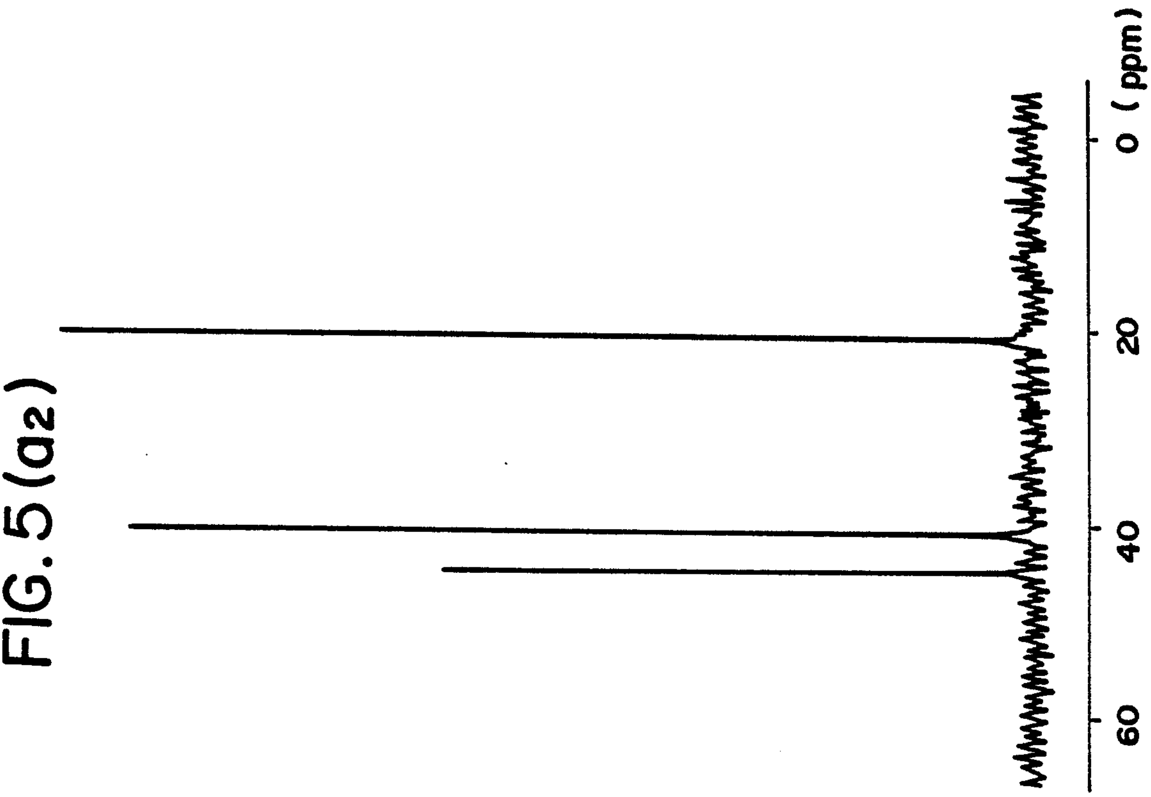

FIG.5(b)

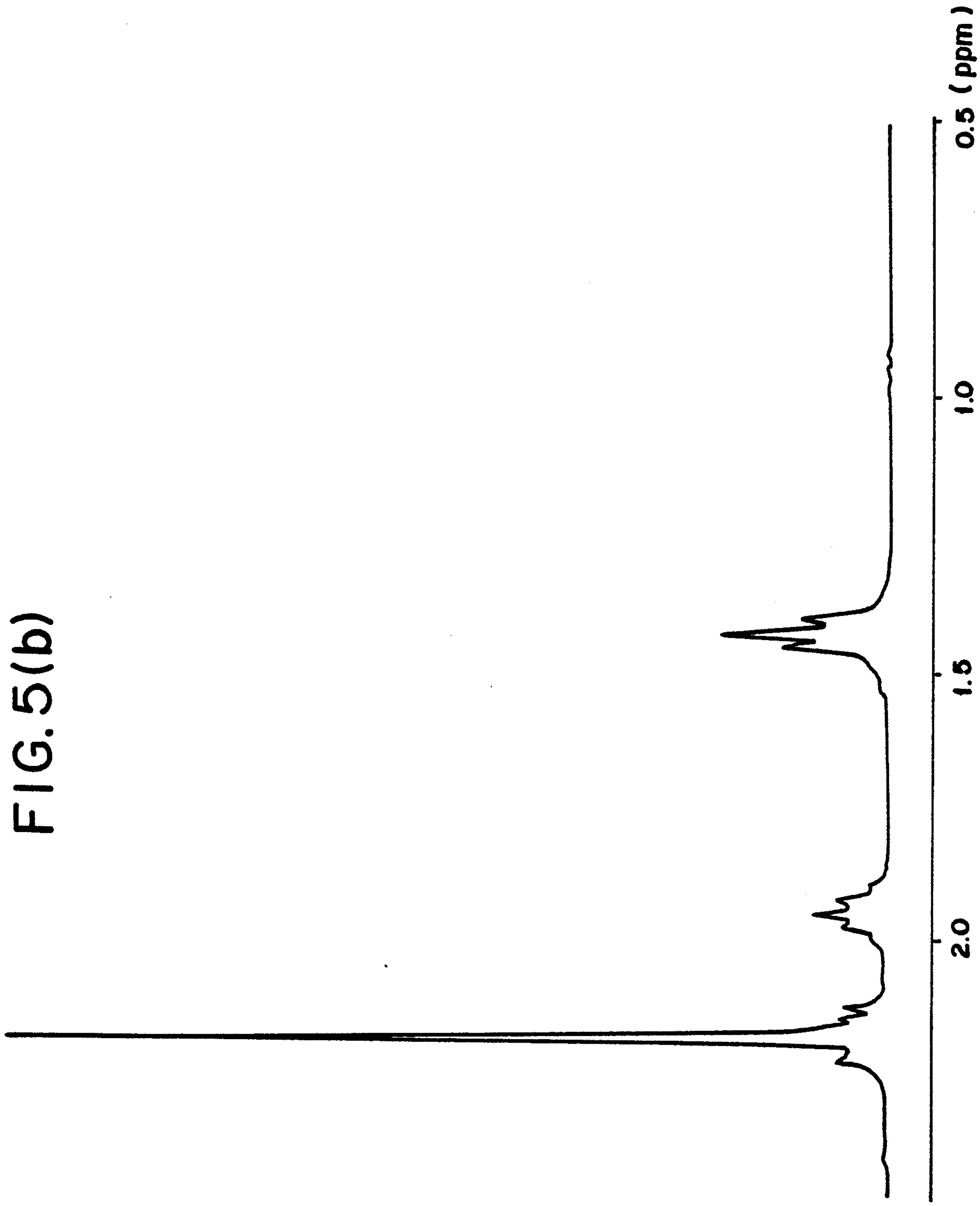

FIG. 6

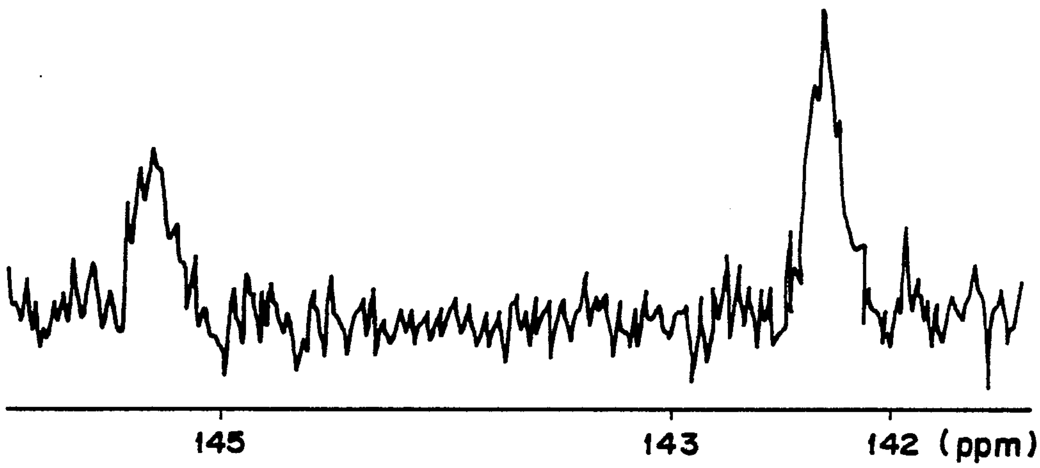


FIG. 7

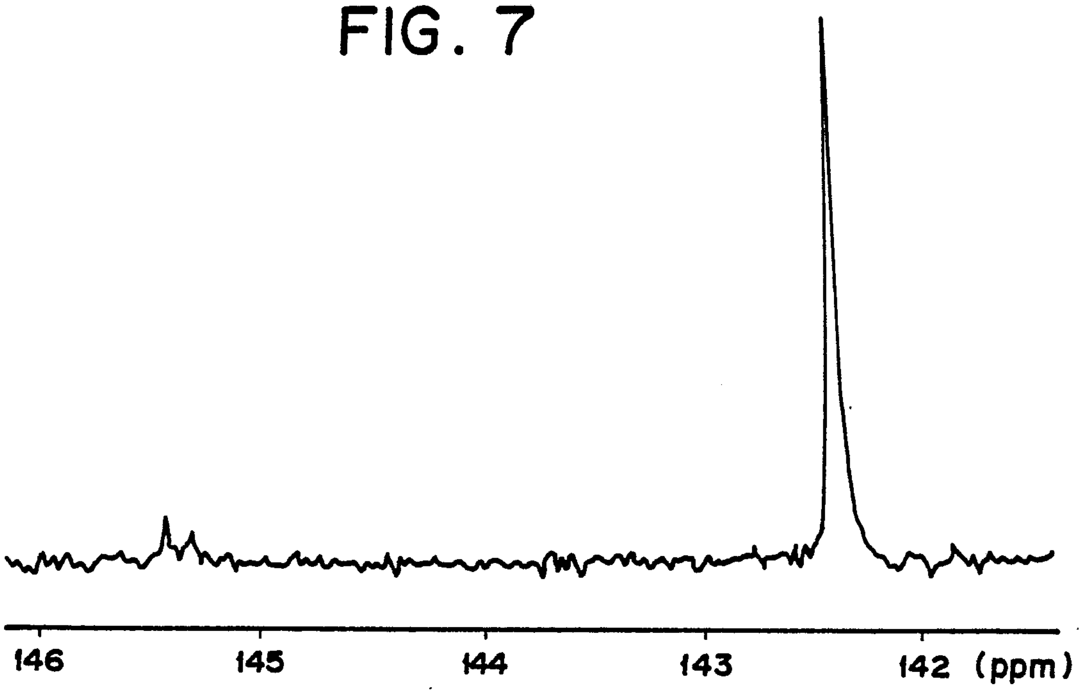

FIG. 8

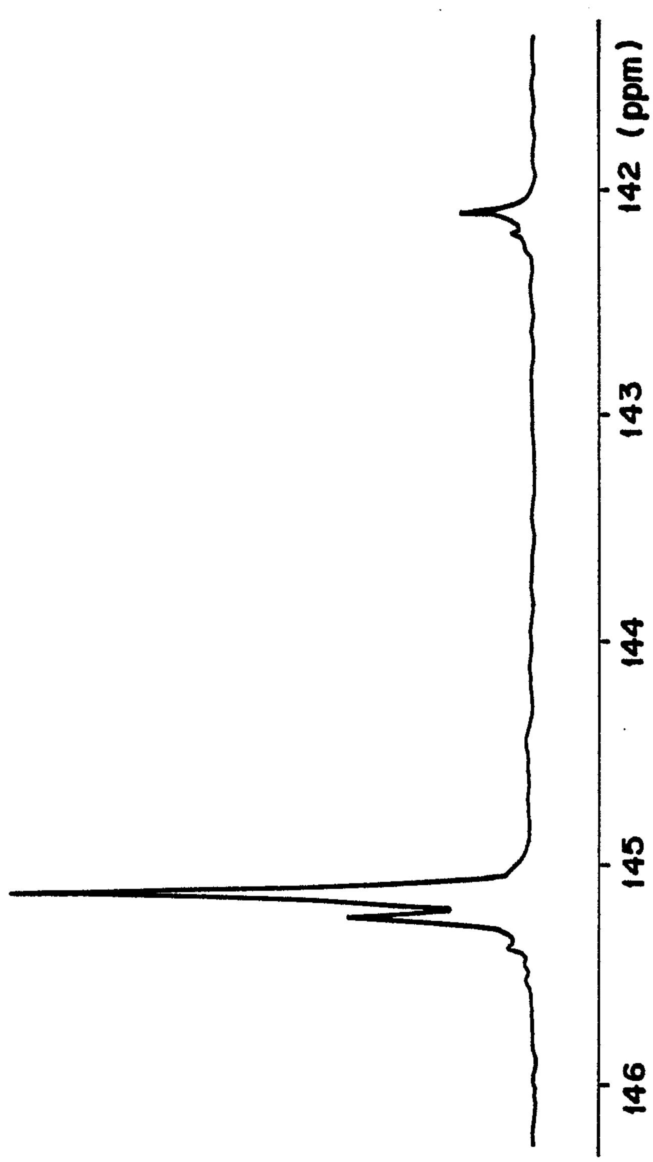

FIG. 9(a)

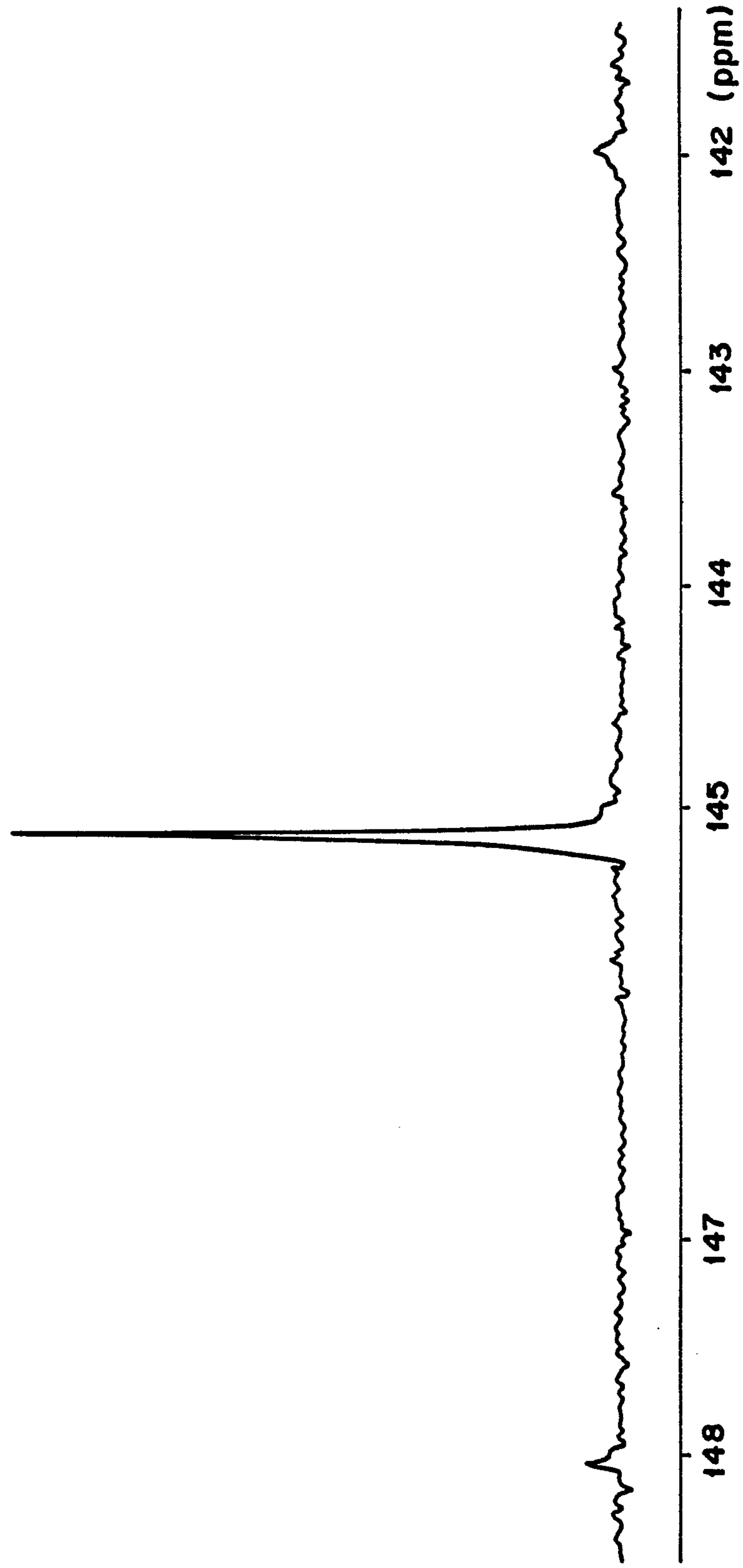

FIG. 9 (b)

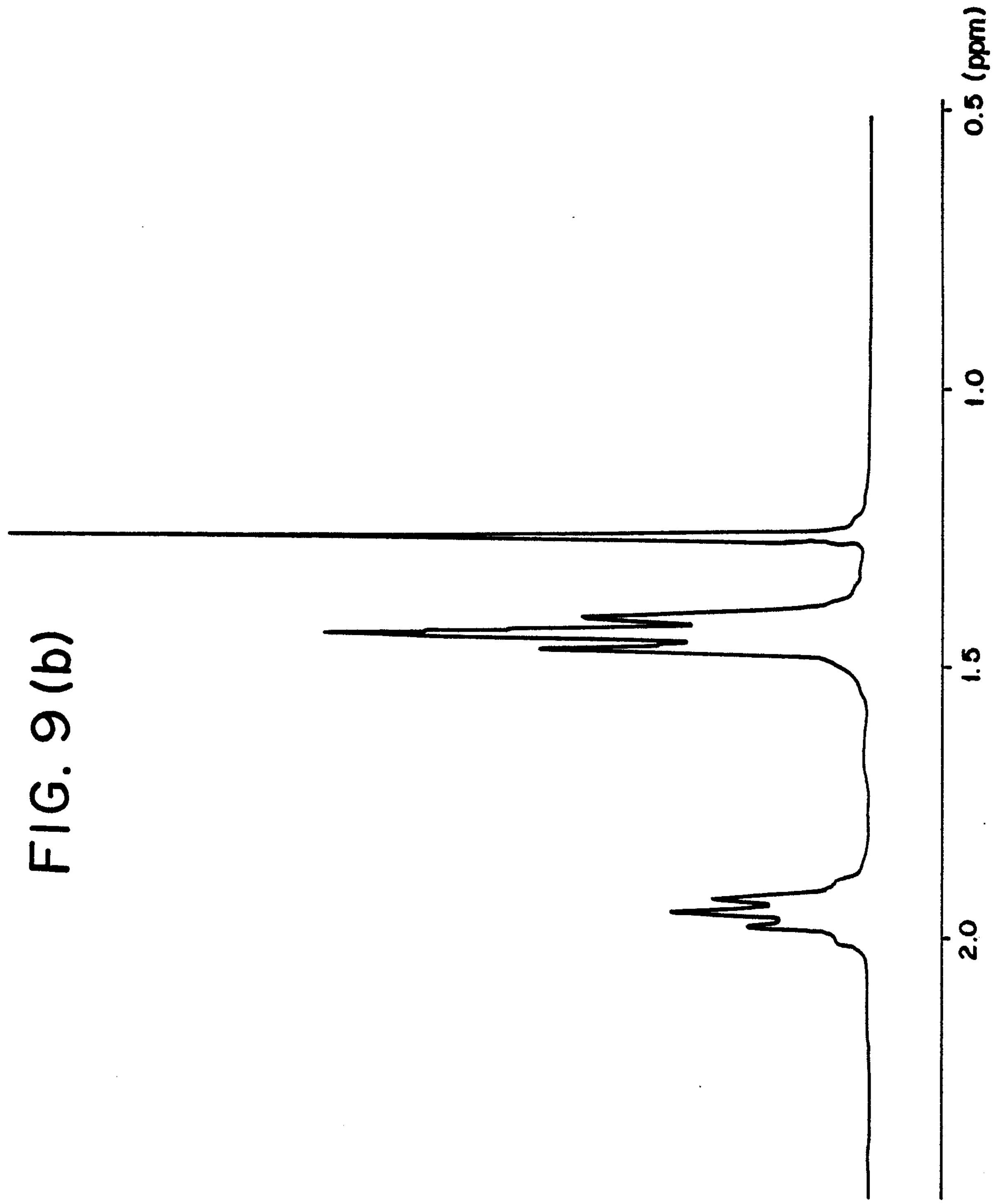

FIG. 10

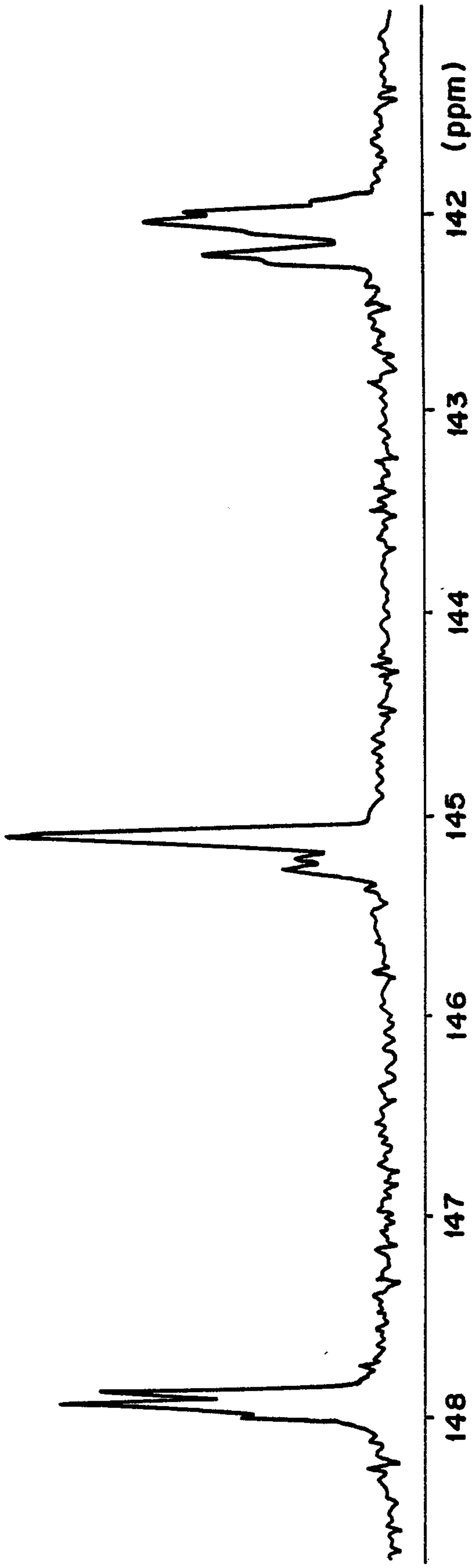


FIG.11 (a)

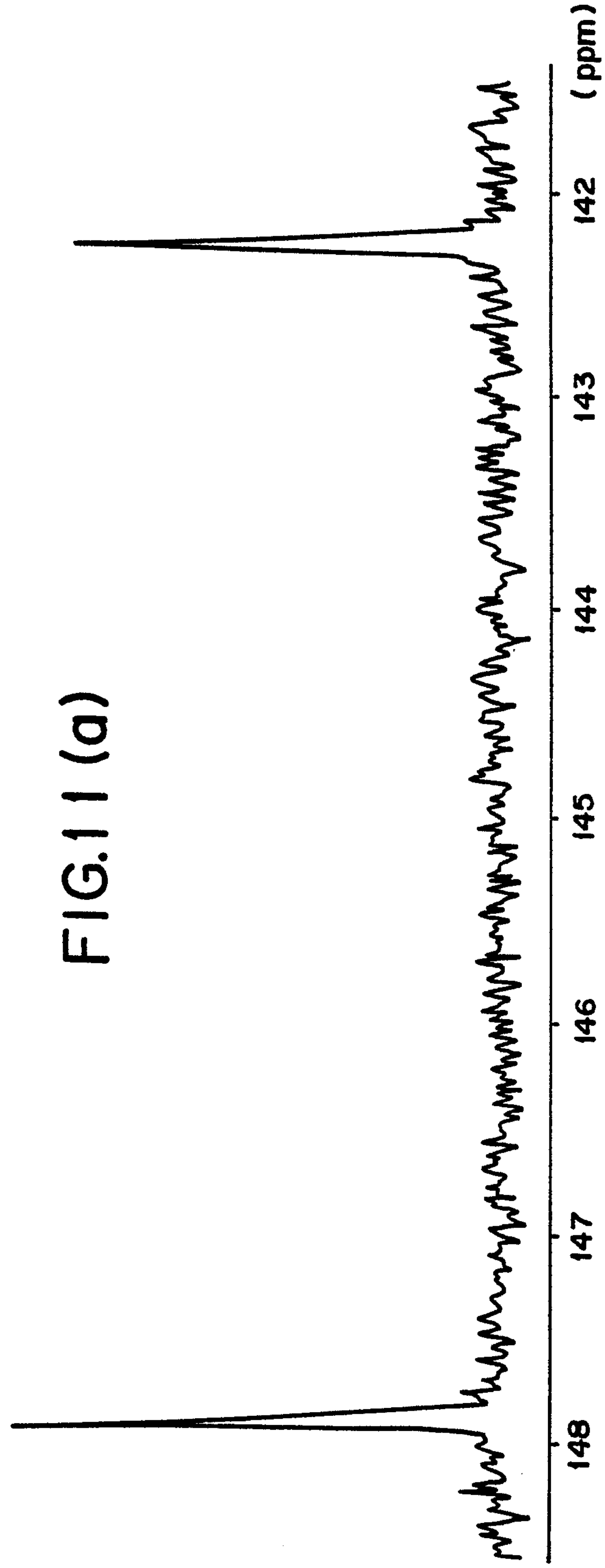

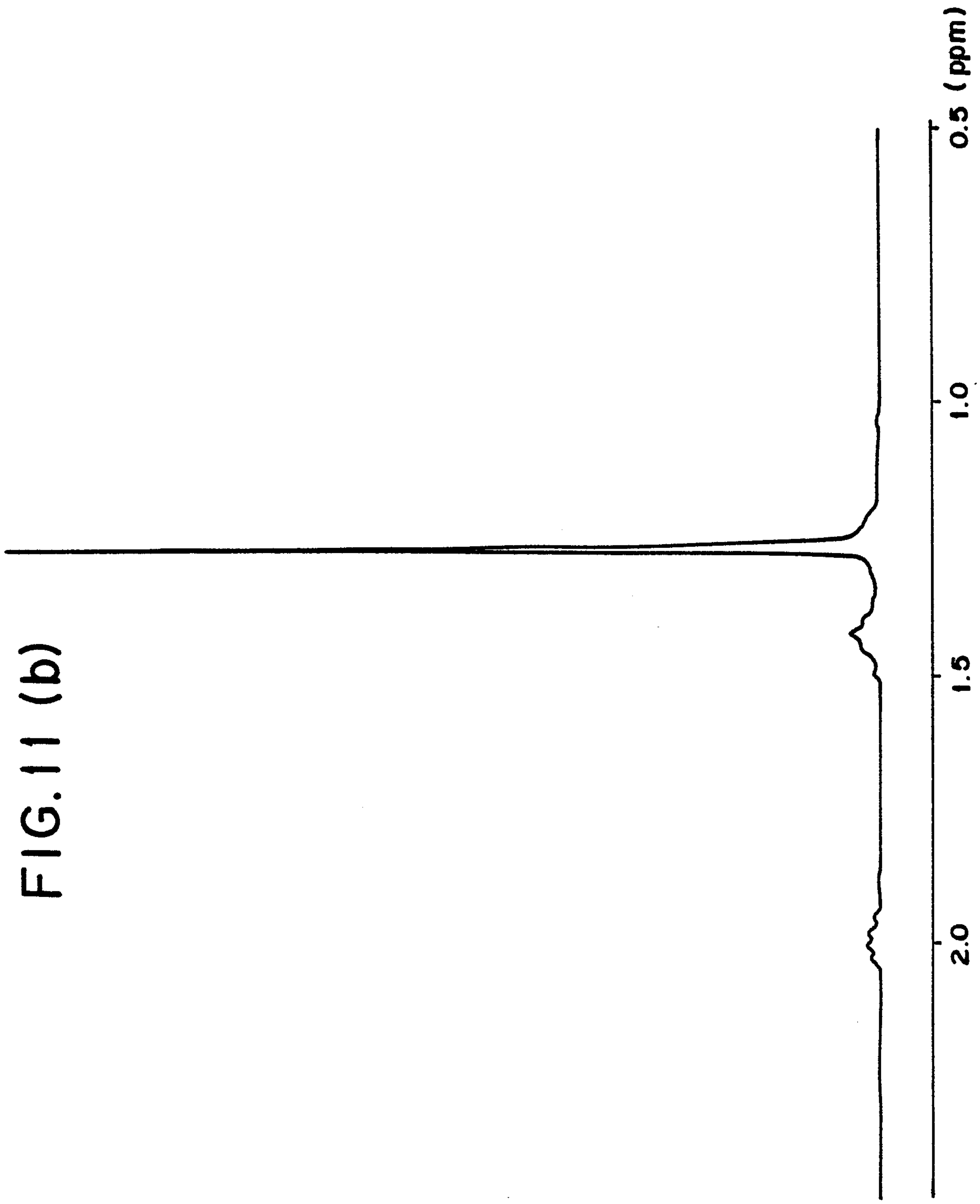


FIG.11 (b)

FIG. 12(a)

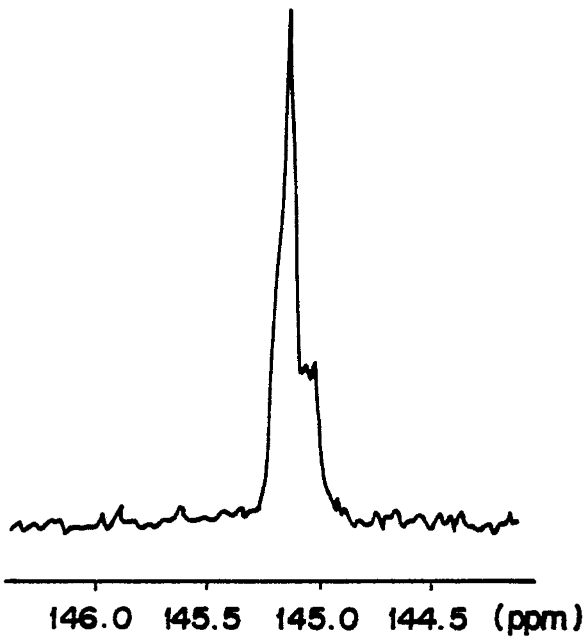

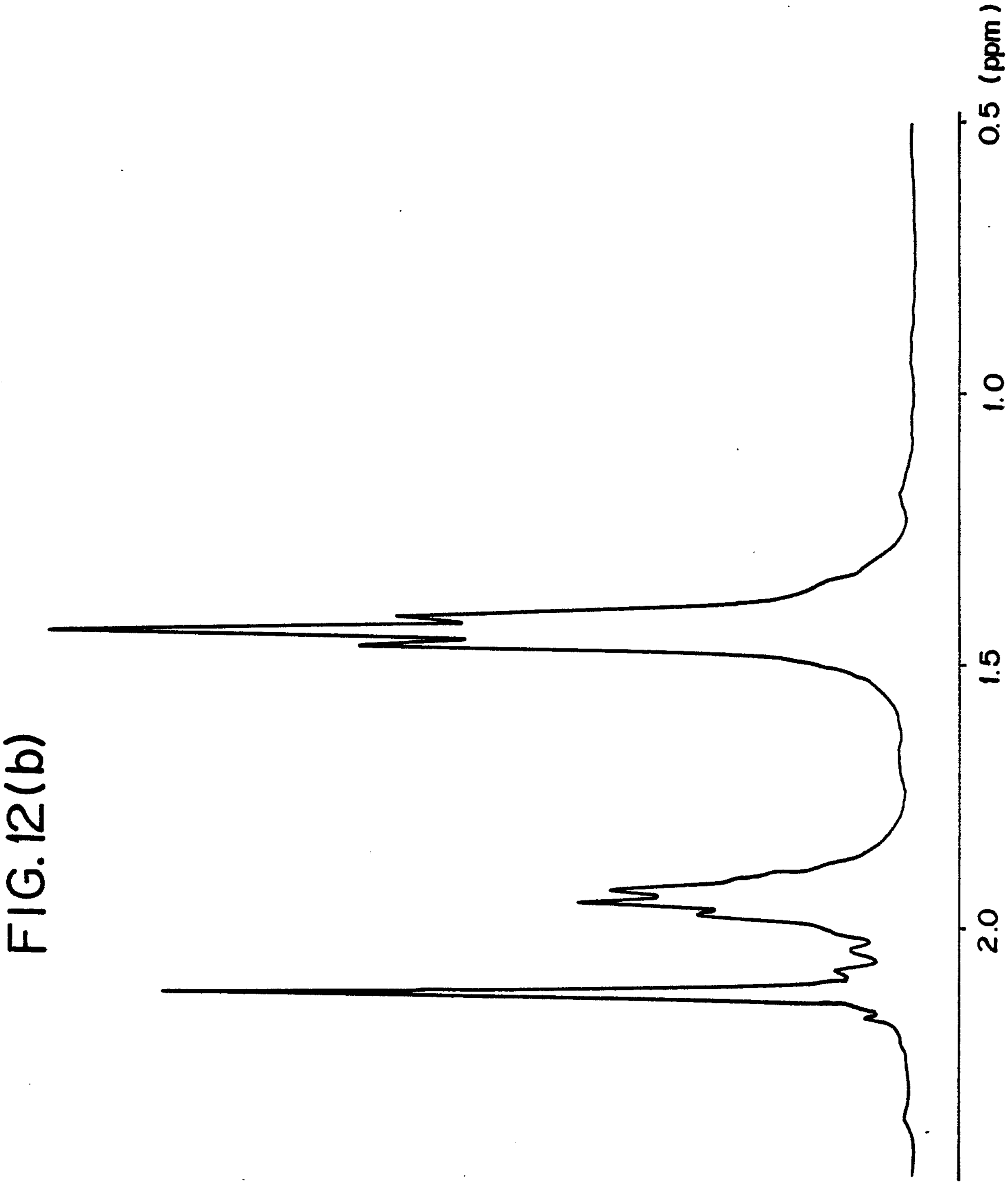


FIG.12(b)

FIG. 13

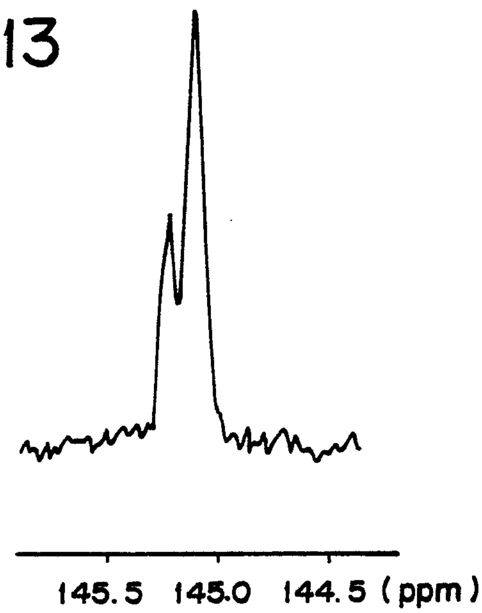


FIG. 14(a)

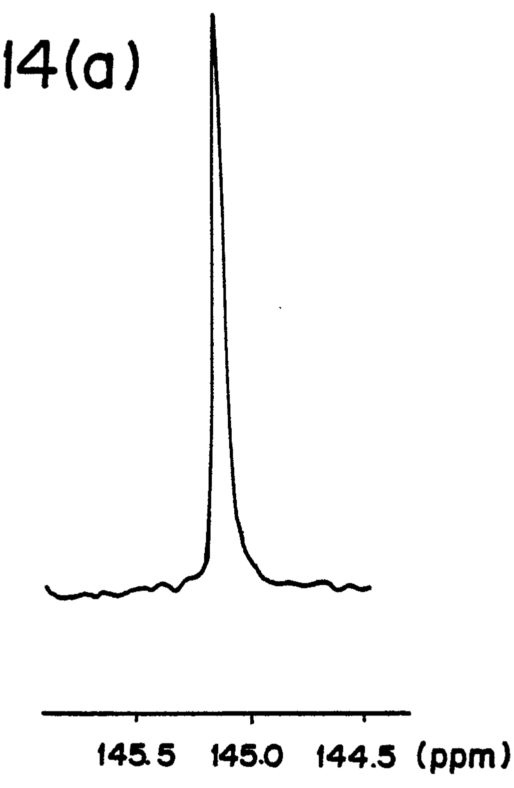

FIG. 14 (b)

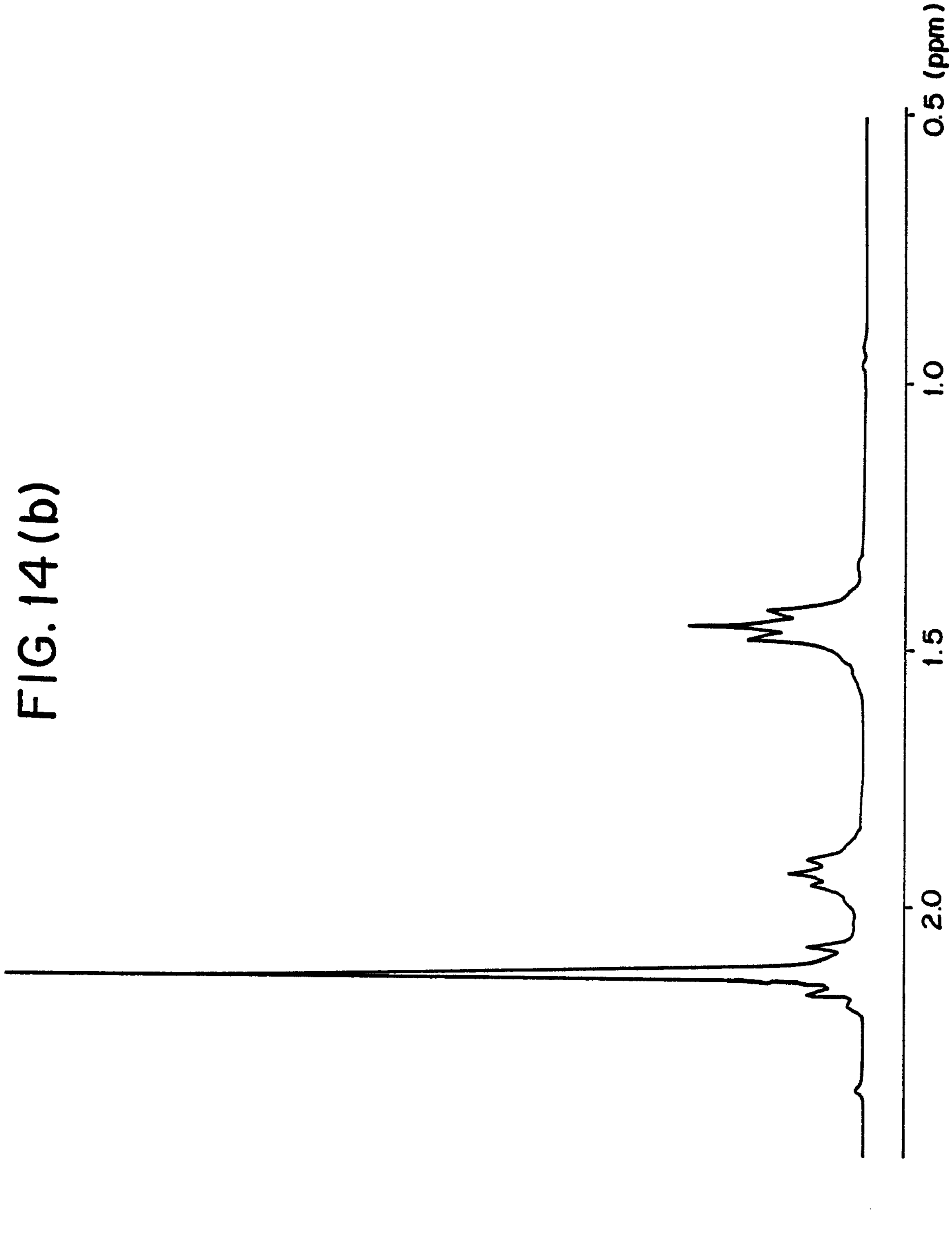

FIG. 15

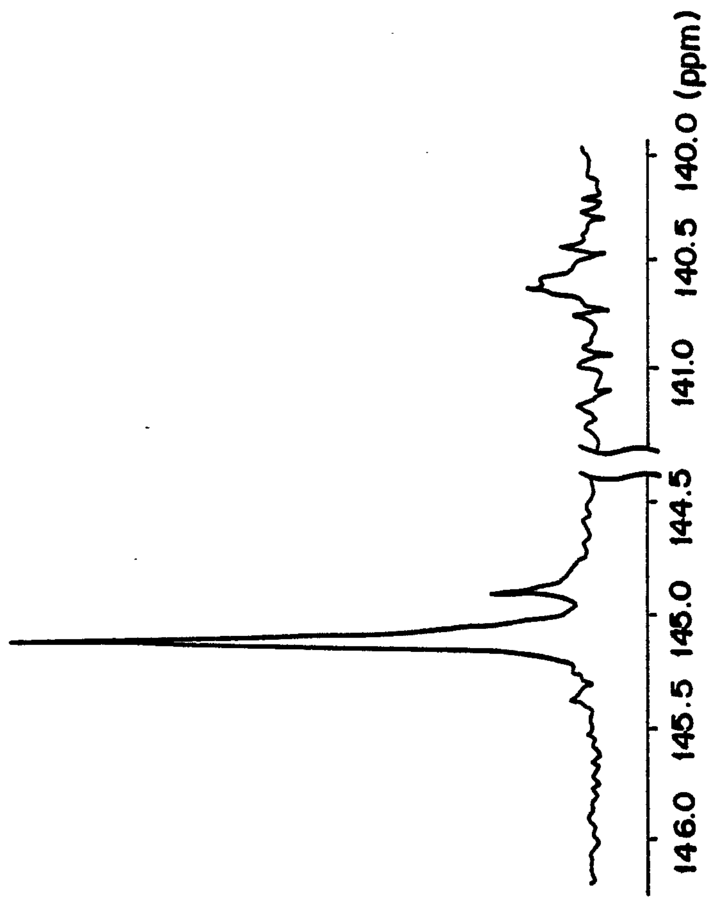
146.0
145.5
145.0
144.5
141.0
140.5
140.0 (ppm)

FIG. 16

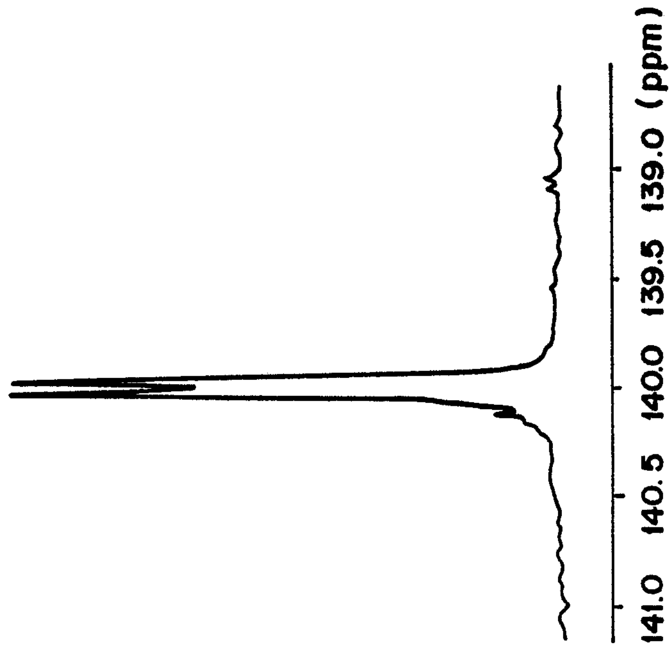
141.0
140.5
140.0
139.5
139.0 (ppm)

FIG. 18

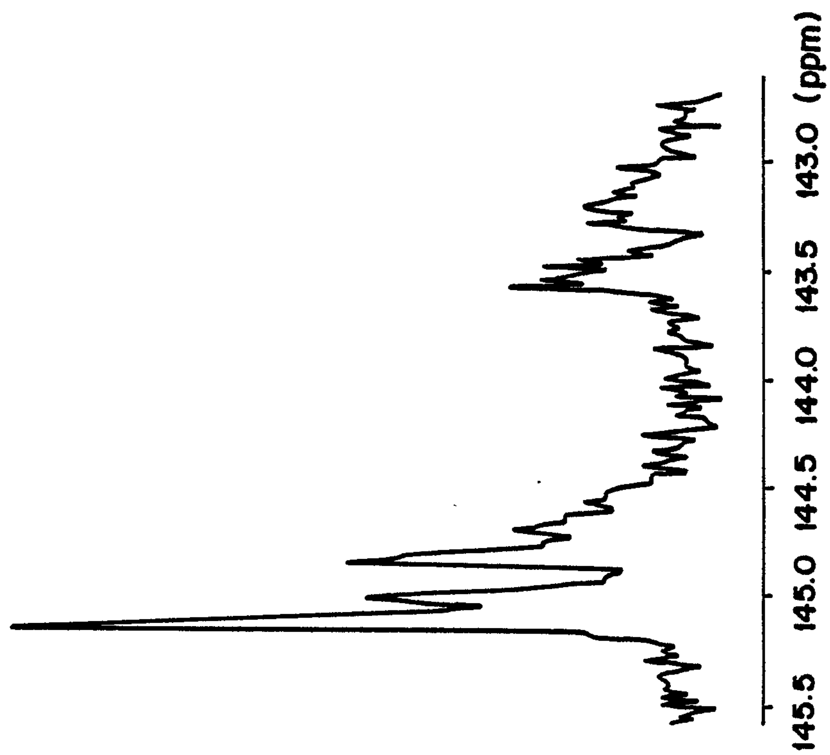
145.5
145.0
144.5
144.0
143.5
143.0
(ppm)

FIG.17

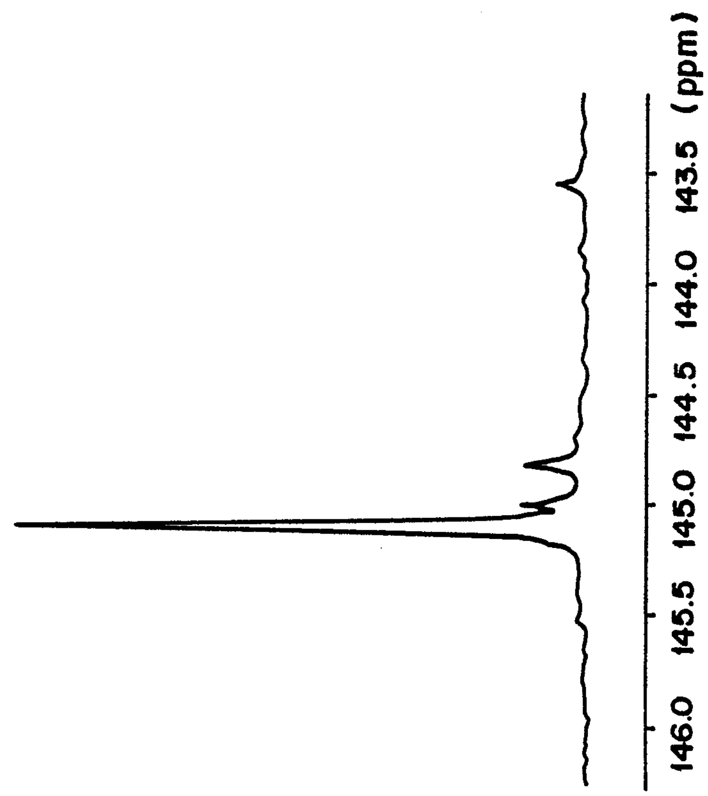
146.0
145.5
145.0
144.5
144.0
143.5
(ppm)

FIG. 19

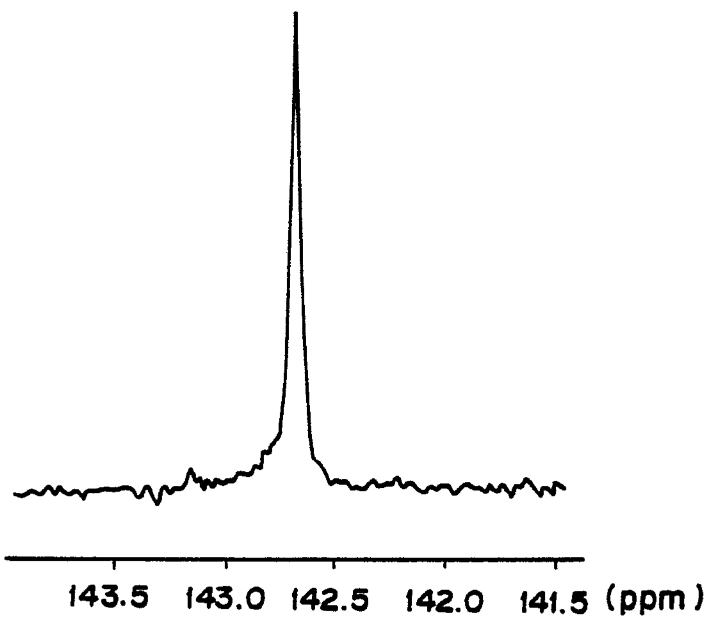

FIG.20

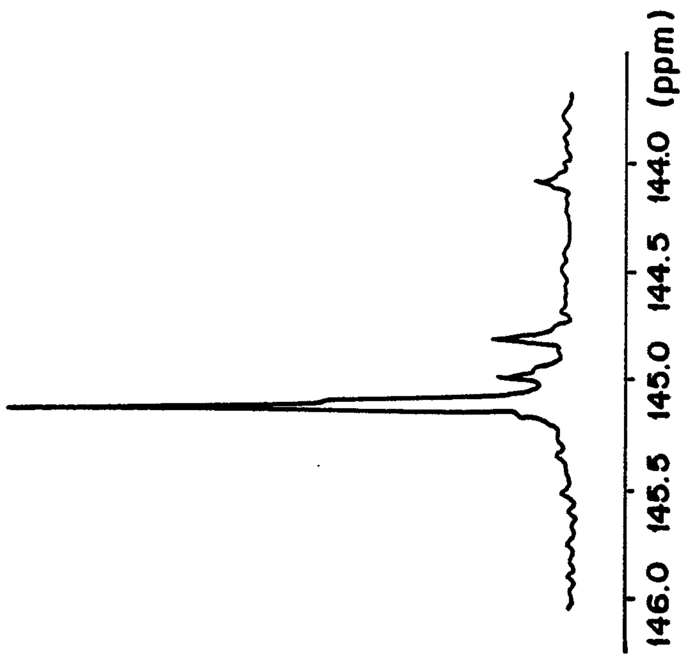


FIG.21